# EUROPÄISCHE PATENTSCHRIFT

(11) **EP 4 267 348 B1**
(45) Veröffentlichungstag und Bekanntmachung des Hinweises auf die Patenterteilung: **29.01.2025**
(21) Anmeldenummer: 21843870.3
(22) Anmeldetag: 21.12.2021
(51) Int. Cl.: B21D 5/00, B21D 5/02, B25J 5/02, B25J 18/00, B25J 15/04, B25J 9/04, B25J 9/00, B21D 43/10

(54) **BIEGEANLAGE UND MANIPULATOR MIT ROTIERBARER GREIFERANORDNUNG**
BENDING INSTALLATION AND MANIPULATOR WITH ROTATABLE GRIPPER ARRANGEMENT
SYSTÈME DE CINTRAGE ET MANIPULATEUR ÉQUIPÉ D'UN DISPOSITIF DE PRÉHENSION ROTATIF

(30) Priorität: 23.12.2020 AT 511372020
(43) Veröffentlichungstag der Anmeldung: 01.11.2023
(73) Patentinhaber: TRUMPF Maschinen Austria GmbH & Co. KG., 4061 Pasching (AT)
(72) Erfinder: ANGERER, Gerhard, 4203 Altenberg (AT); SCHERNHAMMER, Michael, 4060 Leonding (AT); HAUSMANN, Florian, 4050 Traun (AT); MAIER, Florian, 4060 Leonding (AT); HÖRL, Matthias, 4020 Linz (AT); THEIS, Helmut, 4540 Pfarrkirchen (AT); KOVJENIC, Nenad, 4020 Linz (AT); STEININGER, Verena, 4020 Linz (AT); FREUDENTHALER, Klemens, 4020 Linz (AT); EDLBAUER, Richard, 4252 Liebenau (AT); KEPLINGER, Walter, 4184 Helfenberg (AT); GUGLER, Gerhard, 4085 Hofkirchen im Mühlkreis (AT); AUSTALLER, Alois, 4661 Roitham (AT)
(74) Vertreter: Burger, Hannes
(86) Internationale Anmeldenummer: PCT/AT2021/060481
(87) Internationale Veröffentlichungsnummer: WO 2022/133507

(56) Entgegenhaltungen:
- AT-A4- 509 857
- DE-T2- 68 904 261
- IT-A1- TO 990 268
- JP-A- 2006 123 009
- US-A1- 2005 097 940

## Beschreibung

Biegeanlage. Ein solcher Manipulator ist in Dokument AT509857A4 offenbart.

In modernen Bearbeitungszentren erfolgt der Werkstück- bzw. Bauteiltransport häufig vollautomatisiert. Zur Manipulation von Bauteilen, insbesondere von Biegewerkstücken und Profilen, hat sich die Verwendung von Manipulatoren mit Greiferanordnungen, insbesondere mit Unterdruck- bzw. Vakuumgreifern, weithin etabliert. Bei kleinen Bauteilen und auch bei Profilen ist der Einsatz dieser Greiferanordnungen jedoch nur begrenzt bzw. nur mit erhöhtem Aufwand möglich. Beispielsweise ist es bei zu biegenden und hier vor allem bei mehrfach zu biegenden, kleinen Bauteilen und Profilen erforderlich, zwischen den einzelnen Bearbeitungs- bzw. Biegeschritten umzugreifen, dies gegebenenfalls auch mehrfach. Dieses Ablegen und/oder Umgreifen verlängert die Bearbeitungszeiten und wirkt sich somit nachteilig auf die Stückkosten aus.

Um dieser Problematik Abhilfe zu schaffen sind dem Fachmann spezielle, sonderangefertigte Greiferanordnungen bekannt, welche zum Biegen kleiner Bauteile und Profile einsetzbar sind. Derartige Greiferanordnungen sind jedoch technisch und baulich aufwendig und auch nicht universell einsetzbar. Im Stand der Technik sind auch Greiferanordnungen mittels Zangengreifern verschiedener Ausführungsformen bekannt. Hierbei ist es üblich, Hilfsvorrichtungen zum Aufgreifen, zeitweiligen Fixieren, Ablegen und Transportieren von Bauteilen mit unterschiedlicher Größe vorzusehen. Deren Einsatz ist jedoch insofern wenig zufriedenstellend, als die kleinen Bauteile mittels einer zusätzlichen Vorrichtung bereitgestellt werden müssen. Des Weiteren sind nicht alle Bauteilgeometrien und Biegeteile für eine hilfsweise Manipulation mittels Zangengreifern geeignet. Die EP 2688693 B1 stellt beispielsweise eine Fertigungsanlage mit einer Hilfsvorrichtung zur Zwischenpositionierung von Werkstücken vor, wobei die Hilfsvorrichtung zusammenwirkende Halteelemente umfasst. So werden ein aufwendiges Umgreifen bzw. Umpositionieren von Bauteilen und/oder Profilen ermöglicht.

Mit speziellen, sonderangefertigten Vakuum-Greiferanordnungen wird ebenso versucht, die Nachteile des Standes der Technik zu überwinden. Die WO 2019012990 A1 präsentiert eine Werkstückzuführvorrichtung, mit der die Abstandsabmessung der ansteigenden Abschnitte verringert werden kann, wenn ein Werkstückblatt gebogen wird. Beispielsweise sei hier auch die EP 0354559 B1 genannt, welche einen Industrieroboter zum Verbringen eines plattenförmigen Materials in eine Abkantpresse vorschlägt, wobei der Industrieroboter dabei Armteile umfasst, die ein Halteteil zum Halten des Materials und eine Freigabevorrichtung zur Beendigung des Haltens durch das Halteteil enthalten.

Der Einsatz bekannter, sonderangefertigter Greiferanordnungen oder auch der Einsatz zusätzlicher Greiferanordnungen zum Umgreifen verlängert die Bearbeitungszeit bzw. die Rüstzeit, weshalb kleine Bauteile nur unwirtschaftlich und unter erhöhtem Zeitaufwand bearbeitet werden können.

Aufgabe der vorliegenden Erfindung war es, die Nachteile des Standes der Technik zu überwinden und eine Vorrichtung zur Verfügung zu stellen, mittels derer ein Benutzer in der Lage ist, mit technisch einfachen Mitteln auch kleine Bauteile, insbesondere Blechteile mit relativ kurzen Schenkellängen, präzise und einfach einer Bearbeitung zuzuführen, sowie diese Bauteile auf wirtschaftliche Art und Weise zu manipulieren; dies insbesondere mittels standardmäßig verfügbarer Greiferanordnungen.

Diese Aufgabe wird durch einen Manipulator und eine Biegeanlage gemäß den Ansprüchen gelöst.

Die Erfindung betrifft einen Manipulator für Bauteile, insbesondere für Blechteile, wobei der Manipulator dazu ausgebildet ist ein Bauteil aufzugreifen, zu transportieren, zu halten und/oder abzulegen. Der Manipulator umfasst einen vorzugsweise entlang einer Führungsanordnung verfahrbaren Basiskörper. Eine Führungsanordnung umfasst dabei insbesondere eine linear verlaufende Schienenführung bzw. lineare Schienenelemente. Dabei können die linearen Schienenelemente bevorzugt parallel zu einer Längsachse eines Biegetisches einer Biegemaschine ausgerichtet sein. Alternativ kann der Manipulator bzw. dessen Basiskörper auch ortsfest positioniert sein, insbesondere mit dem Boden fest verankert sein. Dabei kann der Basiskörper auch um eine vertikale Rotationsachse rotierbar ausgebildet sein. Der Manipulator umfasst einen über eine horizontale erste Schwenkachse mit dem Basiskörper, schwenkbar gekoppelten ersten Schwenkarm, einen über eine horizontale zweite Schwenkachse mit dem ersten Schwenkarm schwenkbar gekoppelten zweiten Schwenkarm, einen über eine horizontale dritte Schwenkachse mit dem zweiten Schwenkarm schwenkbar gekoppelten dritten Schwenkarm, wobei am dritten Schwenkarm eine radial zur dritten Schwenkachse verlaufende erste Rotationsachse ausgebildet ist. Erfindungsgemäß ist ein über die erste Rotationsachse mit dem dritten Schwenkarm rotierbar gekoppelter Greifertragarm ausgebildet, wobei der Greifertragarm radial zur ersten Rotationsachse verläuft und wobei eine Greiferanordnung über eine zweite Rotationsachse, welche von der ersten Rotationsachse beabstandet ist, mit dem Greifertragarm rotierbar gekoppelt ist.

Die erfindungsgemäße Ausbildung eines Manipulators ermöglicht eine effiziente Bearbeitung von Bauteilen, insbesondere von Biegeteilen. Der erfindungsgemäß ausgebildete Manipulator ist nicht nur dazu in der Lage - und wie gemäß dem Stand der Technik bekannt ist - Schwenkbewegungen um horizontale Achsen ausführen, sondern kann zusätzlich auch rotatorische Bewegungen um zumindest zwei Rotationsachsen ausführen. Das hat den Vorteil, dass an Bauteilen, an welchen mehrere Bearbeitungsschritte, respektive mehrere Biegeschritte, durchzuführen sind, kein Ablegen und/oder Umgreifen erforderlich ist. Vor allem bei kleinen Bauteilen und auch bei Profilen ist der Einsatz des erfindungsgemäßen Manipulators zweckmäßig. Insbesondere ist es bei zu biegenden und vor allem bei mehrfach zu biegenden, kleinen Bauteilen und Profilen nicht erforderlich, zwischen den einzelnen Bearbeitungs- bzw. Biegeschritten umzugreifen. So werden die Bearbeitungszeiten verkürzt, was sich unter anderem positiv auf die Stückkosten auswirkt. Des Weiteren ermöglicht die erfindungsgemäße Ausbildung eines Manipulators ein vergleichsweise nahes Heranbewegen des Manipulators an die Biegemaschine, respektive an ein Unterwerkzeug, welches an einem Biegetisch angeordnet ist. Die quasi exzentrische bzw. versetzte Ausbildung mittels eines Greifertragarms eines Manipulators ermöglicht ein nahes und gegebenenfalls sogar unmittelbares Heranführen der Greiferanordnung und des von der Greiferanordnung gehalterten Bauteiles an eine Biegemaschine, insbesondere an das Unterwerkzeug der Biegemaschine. Eine derartige Verlängerung ermöglicht das mehrstufige Bearbeiten bzw. Biegen eines Bauteiles ohne in der Regel zeitraubender Greiferumsetzungen. Vorteilhaft ist auch, dass durch das Vorsehen des quasi exzentrischen Greifertragarms, Standard-Greiferanordnungen anordenbar, respektive montierbar sind und somit keine teuren und/oder technisch aufwendigen Sonderanfertigungen erforderlich sind. Vor allem bei Bauteilen bzw. Blechbauteilen, bei welchen relativ kurze Schenkellängen geformt werden sollen, bietet der erfindungsgemäße Manipulator bedeutende Performance- und Zeitvorteile. Diese relativ kurzen Schenkellängen können dabei sogar im Abschnitt zwischen dem Manipulator bzw. dessen Greiferanordnung und dem Unterwerkzeug einer Biegemaschine vorliegen, also im manipulatorseitigen Zuführbereich einer Biegemaschine positioniert sein. Durch die Vereinfachung der Verfahrbewegung des Manipulators kann auch eine damit verbundener Programmieraufwand reduziert werden. Die Programmierung kann dabei sowohl schneller, als auch fehlerfreier erfolgen. Durch die Reduktion oder sogar den Entfall eines aufwendigen und risikobehafteten Umgreifens können Kollisionen vermieden werden. Auch durch den generell größeren Abstandes zwischen Manipulator und Maschinen, insbesondere Biegemaschinen, in dessen unmittelbaren Nahbereich bzw. Manipulationsbereich kann ein Kollisionsrisiko weiter vermindert werden. Insgesamt wird eine Prozesssicherheit durch die Reduktion oder gar den Entfall von Positionsfehlern oder etwaiger Vakuumverluste durch das Vermeiden des Umgreifen erhöht.

An dieser Stelle sei ausdrücklich darauf hingewiesen, dass mit der Formulierung, "der Manipulator umfasst einen über eine horizontale erste Schwenkachse mit dem Basiskörper schwenkbar gekoppelter ersten Schwenkarm", sowohl eine unmittelbare, also direkte Verbindung zwischen Basiskörper und erstem Schwenkarm gemeint sein kann, aber natürlich auch, dass eine mittelbare, indirekte Verbindung zwischen Basiskörper und erstem Schwenkarm gemeint sein kann. So kann es sich bei dem Manipulator beispielsweise sowohl um einen dreiachsigen, als auch um einen sechsachsigen Manipulator, insbesondere um einen sechsachsigen Knickarmroboter, handeln. Die jeweilige Ausführung liegt dabei im Können des Fachmanns, der die Art und Anzahl der Schwenkachsen an die jeweiligen Erfordernisse der spezifischen Anwendung anpasst.

Des Weiteren kann es zweckmäßig sein, wenn die erste Rotationsachse und die zweite Rotationsachse zueinander parallel ausgebildet sind. Mittels dieser vorteilhaften Weiterbildung kann ein technisch bzw. konstruktiv einfacher Manipulatoraufbau realisiert werden. Die Parallelität der beiden Rotationsachsen kann auch in Bezug auf die Programmierbarkeit bzw. das so genannte "Teachen" eines Manipulators von Vorteil sein.

Ferner kann vorgesehen sein, dass die Greiferanordnung ein am Greifertragarm rotierbar gelagertes Basiselement und ein mit dem Basiselement bedarfsweise koppelbares, insbesondere werkzeuglos wechselbares, Greiferelement umfasst. Durch das Vorsehen eines rotierbar gelagerten Basiselements kann die technische Möglichkeit einer Rotation der Greiferanordnung um die zweite Rotationsachse geschaffen werden. Durch das Vorsehen eines mit dem Basiselement bedarfsweise koppelbaren Greiferelements können verschiedene Typen von Greiferelementen angeordnet oder das Greiferelement im Falle von einem Defekt oder von Wartungs- und Reparaturarbeiten gewechselt werden. Wenn das Greiferelement werkzeuglos oder mit wenigen Arbeitsschritten wechselbar ist, können derartige Wartungs- und Reparaturarbeiten gegebenenfalls besonders einfach und rasch erfolgen. Es kann auch zweckmäßig sein, wenn es sich bei den am Basiselement anordenbaren Greiferelementen um Standard-Greiferelemente handelt, d.h. dass keine Sonderanfertigungen oder speziell angepasste Adapter zur Koppelung mit dem Basiselement notwendig sind.

Darüber hinaus kann vorgesehen sein, dass das Greiferelement einen Zangengreifer und/oder einen Magnetgreifer umfasst. Je nachdem, welche Art oder Größe bzw. Geometrie von Bauteilen, respektive von Blechteilen, zur Bearbeitung bzw. Manipulation vorgesehen ist, kann es zweckmäßig sein, Zangengreifer und/oder Magnetgreifer einzusetzen. Gattungsgemäße Zangengreifer bzw. Magnetgreifer, sowie deren Vor- und Nachteile sind dem Fachmann hinlänglich bekannt und werden daher an dieser Stelle nicht näher erläutert. Es kann vorteilhaft sein, wenn das Greiferelement entweder einen Zangengreifer, oder einen Magnetgreifer umfasst, wobei zwischen den beiden Typen von Greiferelementen gewechselt bzw. umgebaut werden kann. Es kann jedoch auch vorteilhaft sein, wenn das Greiferelement als kombiniertes Greiferelement mit der Funktionalität von Zangen- und Magnetgreifern ausgebildet ist.

Vorteilhaft ist auch eine Ausprägung, gemäß welcher vorgesehen sein kann, dass das Greiferelement einen Unterdruckgreifer umfasst und dass zumindest ein Unterdruck-Greiferelement an dem Unterdruckgreifer ausgebildet ist. Gattungsgemäße Unterdruckgreifer sind dem Fachmann hinlänglich bekannt und werden daher nicht näher beschrieben. Bei dem zumindest einen Unterdruck-Greiferelement kann es sich insbesondere um Saugnäpfe bzw. saugnapfartige Anlegemittel handeln, welche zur abdichtenden Anlage an einem Bauteil ausgebildet sind. Grundsätzlich kann auch vorgesehen sein, dass das Greiferelement als kombiniertes Greiferelement ausgebildet ist und je nach spezifischen Anforderungen beispielsweise die Funktionen von Zangengreifern, Magnetgreifern und/oder Unterdruckgreifern kombiniert.

Gemäß einer Weiterbildung ist es möglich, dass eine Unterdruckleitung ausgebildet ist, welche im Übergangsabschnitt zwischen dem dritten Schwenkarm und dem Greifertragarm und/oder im Übergangsabschnitt zwischen dem Greifertragarm und der Greiferanordnung als Drehdurchführung ausgebildet ist. Die Ausbildung einer Unterdruckleitung kann zur Versorgung eines Unterdruckgreifers dienen. Um einen störungsfreien bzw. wenig störanfälligen Betrieb des Manipulators zu ermöglichen, ist es zweckmäßig, wenn die erforderlichen Unterdruckleitungen nicht außenliegend am Manipulator angebracht sind, sondern zumindest teilweise innerhalb der Schwenkarme und des Greifertragarmes angeordnet sind. Hierfür können an Übergangsabschnitten entsprechende Drehdurchführungen vorgesehen sein, sodass es zu einer Drehung bzw. Rotation des Greifertragarmes und/oder der Greiferanordnung kommen kann, ohne Beschädigungen an der Unterdruckleitung zu riskieren. Die technische Ausgestaltung von Drehdurchführungen ist dem Fachmann hinlänglich bekannt und bedarf daher an dieser Stelle keiner näheren Erläuterung.

Ferner kann es zweckmäßig sein, wenn der Greifertragarm über eine bedarfsweise aktivier- und deaktivierbare Kupplung mit dem dritten Schwenkarm und mittels eines ersten Drehlagers drehbar gekoppelt ist. Die Ausbildung einer lösbaren Verbindung zwischen drittem Schwenkarm und Greifertragarm kann vorteilhaft sein, weil dadurch ermöglicht wird, den Greifertragarm auszutauschen, um beispielsweise einen alternativen, längeren Greifertragarm zu montieren.

Darüber hinaus kann vorgesehen sein, dass die Greiferanordnung mit dem Greifertragarm mittels eines zweiten Drehlagers drehbar gekoppelt ist. Das zweite Drehlager kann einer Rotation der Greiferanordnung um ihre eigene Achse, d.h. um die zweite Rotationsachse, ermöglichen.

Des Weiteren kann vorgesehen sein, dass am dritten Schwenkarm eine Momentenstütze rotationsfest angeordnet ist, bevorzugt eine lösbar ausgebildete Momentenstütze ausgebildet ist. Diese Momentenstütze kann vorteilhafterweise an dem dem Greifertragarm zugewandten Abschnitt des dritten Schwenkarms angeordnet sein. Mittels einer am dritten Schwenkarm rotationsfest angeordneten Momentenstütze kann eine Drehung der zweiten Rotationsachse relativ zu einer Drehung der ersten Rotationsachse erfolgen. So kann ein gemeinsamer Antrieb von Greifertragarm und Greiferanordnung realisiert werden.

Gemäß einer besonderen Ausprägung ist es möglich, dass ein Zahnriemengetriebe ausgebildet ist, welches Zahnriemengetriebe ein erstes Zahnrad umfasst, welches relativ zur ersten Rotationsachse drehfest ist und ein zweites Zahnrad umfasst, welches um die zweite Rotationsachse rotierbar ist, und welches Zahnriemengetriebe einen das erste Zahnrad und das zweite Zahnrad bewegungskoppelnden Riemen umfasst. Dieses Zahnriemengetriebe ist zu Einstellung der Winkelposition der Greiferanordnung ausgebildet. Durch das Vorsehen eines Zahnriemengetriebes können die Greiferanordnung und der Greifertragarm bewegungsgekoppelt werden. Dabei kann es vorteilhaft sein, wenn ein gemeinsamer Antrieb für die Greiferanordnung und den Greifertragarm ausgebildet ist. Dies insofern, als keine gesonderte Mechanik zum Bewegen beider Elemente vorzusehen ist und somit eine technisch vergleichsweise einfache Ausgestaltung möglich ist. Eine Ansteuerung für einen solchen Drehantrieb, respektive des Zahnriemengetriebes, ist dem Fachmann bekannt und wird hier daher nicht näher ausgeführt.

Alternativ kann dem ersten Zahnrad ein gesonderter, steuerbarer Drehantrieb zugeordnet sein. Dieser Drehantrieb kann am Greifertragarm positioniert sein. Bevorzugt ist dieser Drehantrieb zentrisch zur ersten Rotationsachse ausgebildet oder vergleichsweise näher zur ersten als zur zweiten Rotationsachse angeordnet. Analoge Maßnahmen können für das nachfolgend beschriebene erste Stirnrad eines Stirnradgetriebes gelten. Dadurch ist ein günstiges Gewichtsverhältnis erzielbar bzw. wird dadurch das baulich bedingte Lastmoment am Greiferende bzw. am Tool-Center-Point des Manipulators gering gehalten. Die Tragfähigkeit bzw. Performance des Manipulators kann so vergleichsweise hoch gehalten werden.

Entsprechend einer vorteilhaften Weiterbildung kann vorgesehen sein, dass das erste Zahnrad einen größeren Durchmesser aufweist als das zweite Zahnrad. Durch das Vorsehen eines relativ zum zweiten Zahnrad kleinen ersten Zahnrad wird die Möglichkeit geschaffen, dass schon geringe Drehbewegungen des ersten Zahnrades um beispielsweise wenige Grad eine deutlich ausgeprägtere bzw. weitere Drehbewegung des zweiten Zahnrades und damit verbunden eine größere Drehbewegung der Greiferanordnung mit sich bringt. Durch eine derart ausgebildetes Übersetzungsverhältnis ist eine einfache und genaue Einstellbarkeit bzw. Positionierbarkeit der Greiferanordnung, respektive des von der Greiferanordnung manipulierten Bauteiles möglich.

Insbesondere kann es vorteilhaft sein, wenn ein erster Drehantrieb zum Rotieren des Greifertragarms um die erste Rotationsachse ausgebildet ist und wenn ein von dem ersten Drehantrieb unabhängig wirkender zweiter Drehantrieb zum Rotieren der Greiferanordnung um die zweite Rotationsachse ausgebildet ist. Eine derart gestaltete Ausführung kann jeweils eine unabhängig bzw. eigenständig ausführbare Rotationsbewegung des Greifertragarms und der Greiferanordnung ermöglichen. Der Befehl für die jeweilige Rotation der Greiferanordnung und/oder des Greifertragarms kann dabei beispielsweise über ein Biegeprogramm an die Drehantriebe ausgegeben werden. Die Ausführung der Rotationsbewegung der Greiferanordnung kann mittels des zweiten Drehantrieb von einer eventuell zeitgleichen Rotationsbewegung des Greifertragsarms, welche durch den ersten Drehantrieb bewirkt werden kann, unabhängig erfolgen. Diese vorteilhafte Weiterbildung kann eine Bewegungsfreiheit des Manipulators zusätzlich verbessern und so weiter zu einer vielseitigen, flexiblen und auch möglichst kollisionsfreien Verwendbarkeit des Manipulators beitragen. Zudem können Verfahrbewegungen des Manipulators vereinfacht werden, was sich positiv auf die damit verbundene Programmierung auswirken kann. So kann eine Programmierung des Manipulators sowohl in kürzerer Zeit, als auch weniger fehleranfällig erfolgen.

In einer vorteilhaften Weiterbildung kann vorgesehen sein, dass der zweite Drehantrieb als elektromotorischer Aktor, bevorzugt als Schrittmotor ausgebildet ist, oder dass der zweite Drehantrieb als pneumatischer Aktor ausgebildet ist, und dass der zweite Drehantrieb am Greifertragarm befestigt ist. Ein Schrittmotor kann die Greiferanordnung dabei je nach Anforderung, also je nach Biegesituation bzw. Programmablauf in die jeweilig erforderliche Position drehen. Es kann auch ein Elektromotor mit Riementrieb vorgesehen sein. Alternativ und besonders bevorzugt kann anstatt eines elektromotorischen Aktors auch ein pneumatischer Aktor vorteilhaft sein. Insbesondere, wenn das Greiferelement ein Unterdruck-Greiferelement umfasst, kann eine Ausbildung des zweiten Drehantriebes als pneumatischer Aktor zweckmäßig sein. Dies insbesondere dann, wenn das Unterdruck-Greiferelement zusätzlich zu seiner Unterdruckversorgung auch eine Überdruckversorgung aufweist, um damit beispielsweise Blechteile ablegen bzw. abblasen zu können. Eine solche Überdruckversorgung kann dabei gegebenenfalls vom pneumatischen Aktor mitgenutzt werden. Dabei kann beispielsweise ein Pneumatikzylinder mit einem Kniehebel oder mit einer Zahnstangen-Ritzelkombination die Rotation um die zweite Rotationsachse einleiten. Zudem wäre auch ein pneumatischer Schwenkantrieb denkbar. Als weitere Alternative wäre auch ein Spindeltrieb mit Schneckenrad oder Zahnstangen-Ritzelkombination denkbar. Dabei kann der zweite Drehantrieb, wenn dieser am Greifertragarm, und dabei bevorzugt an der Unterseite des Greifertragarms, ausgebildet ist, mittels eines Riemens oder mittels einem vergleichbaren Kopplungsmittels, mit der Greiferanordnung funktionsgekoppelt ist, sodass die durch den zweiten Drehantrieb initiierte Drehbewegung auf die Greiferanordnung übertragen werden kann.

Des Weiteren kann es auch überaus vorteilhaft sein, wenn der zweite Drehantrieb zum Rotieren der Greiferanordnung zwischen einem ersten Endanschlag und einem zweiten Endanschlag ausgebildet ist, wobei zwischen dem ersten Endanschlag und dem zweiten Endanschlag bevorzugt eine Rotationsbewegung um bis zu 180° ausführbar ist. Indem die jeweilige Rotationsbewegung um die erste und um die zweite Rotationsachse voneinander unabhängig erfolgen kann, kann es ausreichend sein und auch zur Vermeidung von Kollisionen beitragen, wenn eine Rotationsbewegung um die zweite Rotationsachse limitiert ist. Dabei kann eine Rotationsbewegung beispielsweise zwischen 0° und 180° ausführbar sein, oder auch zwischen 0° und 270° ausführbar sein.

Ferner kann vorgesehen sein, dass ein Stirnradgetriebe ausgebildet ist, welches Stirnradgetriebe ein erstes Stirnrad umfasst, welches um die erste Rotationsachse rotierbar ist und ein zweites Stirnrad umfasst, welches um die zweite Rotationsachse rotierbar ist, wobei das erste und das zweite Stirnrad direkt oder indirekt bewegungsgekoppelt zusammenwirken. Durch diese Ausbildung kein eine direkte mechanische Antriebsverbindung hergestellt werden. Damit können Effekte und Wirkungen analog zum vorstehend beschriebenen Zahnriemengetriebe erreicht werden. Es kann dabei auch zweckmäßig sein, wenn zwischen dem ersten und dem zweiten Stirnrad ein drittes Stirnrad ausgebildet ist, welches mit dem ersten und zweiten Stirnrad kämmend in Eingriff steht, sodass eine gleichsinnige Drehbewegung des Greifertragarmes und der Greiferanordnung möglich sind.

Darüber hinaus kann vorgesehen sein, dass eine größte Höhe des auskragenden Abschnittest des Greifertragarms inklusive der auf dem Greifertragarm gehalterten Greiferanordnung geringer ist, als eine Aufbauhöhe eines Unterwerkzeuges gegenüber einem Biegetisch einer Biegemaschine. Insbesondere kann die größte Höhe maximal 150 mm betragen, vorzugsweise maximal 100 mm betragen. Mittels einer möglichst kompakten Bauweise bzw. Bauhöhe kann die Greiferanordnung bzw. ein von der Greiferanordnung manipuliertes Bauteil nahe oder sogar unmittelbar an das Unterwerkzeug herangeführt werden. Insbesondere kann durch diese Maßnahmen gewährleistet werden, dass die Greiferanordnung relativ nahe oder unmittelbar an ein Unterwerkzeug einer Biegemaschine heranbewegt werden kann und dabei nicht über die Bauteil-Auflageebene des Unterwerkzeuges, insbesondere eines Blechteils welches zur Auflage am Unterwerkzeug vorgesehen ist, emporragt. Dadurch können auch Bauteile mit relativ kurzen Schenkellängen manipuliert bzw. einer Biegemaschine zugeführt werden, ohne dass ein Wechseln, Umgreifen oder Repositionieren der Greiferanordnung gegenüber dem zu bearbeitenden Bauteil erforderlich ist. Dadurch kann die Performance gesteigert werden bzw. können so die Manipulations- und Bearbeitungs-Taktzeiten geringgehalten werden.

Vorteilhaft ist auch eine Ausprägung, gemäß welcher vorgesehen sein kann, dass der Greifertragarm einen ersten Tragarmabschnitt und einen zweiten Tragarmabschnitt aufweist, wobei der erste Tragarmabschnitt und der zweiten Tragarmabschnitt in Richtung der ersten Rotationsachse oder zweiten Rotationsachse zueinander versetzt angeordnet sind. Durch die Ausbildung des Greifertragarmes mit einer Abstufung, respektive mit einer Kröpfung, kann eine vorteilhafte, geringe größte Höhe des Greifertragarmes technisch einfach realisiert werden. Eine geringe Höhe des Greifertragarmes inklusive der auf dem Greifertragarm gehalterten Greiferanordnung kann vorteilhaft sein, damit die Anordnung möglichst nahe an ein Unterwerkzeug heranführbar ist. Darüber hinaus kann dadurch die Auskragungshöhe des Endeffektors bzw. die Länge der Ausladung des Endabschnittes des Manipulators gering gehalten werden, wodurch das erzielbare Lastmoment des Manipulators gesteigert bzw. hoch gehalten werden kann.

Gemäß einer Weiterbildung ist es möglich, dass eine Tragarmlänge des Greifertragarms, welche Tragarmlänge sich zwischen der ersten Rotationsachse und der zweiten Rotationsachse erstreckt, kürzer ist als eine Länge des ersten, zweiten und/oder dritten Schwenkarmes. Ein relativ zu den Schwenkarmen gesehen kurzer Greifertragarm kann aus statischer bzw. konstruktiver Sicht günstig sein.

Es kann zudem auch überaus vorteilhaft sein, wenn das Basiselement zumindest zwei Greiferelement-Tragarmen mit jeweils einem ersten Endabschnitt und mit jeweils einem zweiten Endabschnitt aufweist, welche Greiferelement-Tragarme radial zur zweiten Rotationsachse beabstandet sind, und welche Greiferelement-Tragarme an ihrem ersten Endabschnitt in vorzugsweise bogenförmigen Führungsabschnitten im Basiselement der Greiferanordnung verstellbar geführt und lösbar fixiert sind und welche Greiferelement-Tragarme an ihrem zweiten Endabschnitt ein Greiferelement aufweisen. Die Verstellung kann dabei sowohl manuell, als auch automatisiert erfolgen. Zweckmäßigerweise können die ersten Endabschnitte zur zweiten Rotationsachse in einen gleichen und insbesondere auch konstanten Abstand angeordnet sein. Eine lösbare Verbindung zwischen den ersten Endabschnitten gegenüber der Basisplatte kann dabei beispielsweise mittels eines Gewindes und einer Mutter realisiert sein. Es wäre aber beispielsweise auch eine bajonettverschluss-artige Fixierung denkbar. Vorteilhafterweise ist eine Verbindung werkzeuglos bzw. manuell lösbar bzw. herstellbar. Damit der jeweils erste Endabschnitt konstant von der zweiten Rotationsachse beabstandet ist, kann der jeweilige Führungsabschnitt die Form eines Bogensegmentes aufweisen, welches in Umfangsrichtung um die zweiten Rotationsachse verläuft. Der jeweils erste Endabschnitt ist mit einer Mittelachse ausgebildet, welche Mittelachse bevorzugt zur zweiten Rotationsachse parallel angeordnet ist. Zweckmäßig kann es auch sein, wenn die Greiferelement-Tragarme länglich ausgebildet sind und sich in Längsrichtung vom ersten zum zweiten Endabschnitt erstrecken. Indem der jeweils zweite Endabschnitt in Umfangsrichtung um die Mittelachse des jeweils zugehörigen ersten Endabschnitts drehbar ist, kann das Greiferelement an eine Vielzahl an Bauteilgeometrien adaptierbar sein. Dabei kann es sein, dass der erste Endabschnitt vollständig, also 360° oder mehr um die Mittelachse drehbar ist, oder dass der erste Endabschnitt zwischen Anschlaggrenzen rotierbar ist.

Hierbei hat es sich auch als vorteilhaft erwiesen, wenn die zumindest zwei Greiferelement-Tragarme, bevorzugt im Bereich ihres jeweiligen ersten Endabschnitts, ein Fixiermittel aufweisen, welches Fixiermittel zur lösbaren Fixierung der zumindest zwei Greiferelement-Tragarme gegenüber dem Basiselement ausgebildet ist. Bei dem Fixiermittel kann es sich dabei beispielsweise um einen schwenkbaren Hebel handeln, welcher, wenn er in seine Fixier- oder Verriegelungsposition verbracht ist, mit dem Basiselement oder Bauteilen am Basiselement gekoppelt ist. So kann auf baulich einfache Art und Weise ein unerwünschtes Bewegen der Greiferelement-Tragarme in Umfangsrichtung der zweiten Rotationsachse unterbunden bzw. hintangehalten werden.

Eine Weiterbildung gemäß welcher eine Unterdruckleitung des zumindest einen Unterdruck-Greiferelements mit einem fluidischen Absperrelement ausgebildet sein kann, hat sich ebenso als zweckmäßig erwiesen. Ein solches Absperrelement kann beispielsweise im Nahbereich eines Saugnapfs bzw. saugnapfartigen Anlegemittels des Unterdruck-Greiferelements angeordnet sein oder auch in einem Greiferelement-Tragarm ausgebildet sein. Ein Absperrelement kann als Absperrventil ausgebildet sein, welches sowohl automatisiert ansteuerbar oder betätigbar sein kann, oder auch manuell versperr- oder entsperrbar sein kann. Diese Weiterbildung kann eine individualisierte Anpassung der Greiferanordnung an verschiedene Bauteilgrößen und Bauteilformen vereinfachen bzw. erleichtern. So können nicht benötigte Unterdruck-Greiferelemente bedarfsweise zu- und weggeschalten werden.

Darüber hinaus hat es sich auch als vorteilhaft erwiesen, wenn der Manipulator in Bezug auf seine Schwenkachsen ausschließlich die genannte horizontale erste Schwenkachse, die genannte horizontale zweite Schwenkachse, die genannte horizontale dritte Schwenkachse, die genannte erste Rotationsachse, und die genannte zweite Rotationsachse aufweist. Dadurch kann ein Manipulator geschaffen werden, welcher in Zusammenhang mit einem automatisierten Handling von plattenartigen Werkstücken, insbesondere in Zusammenhang mit Blechteilen und Biegeanlagen für diese Blechteile, ein günstiges Leistungs- zu Kosten-Verhältnis aufweist. Eine derartige Kinematik ermöglicht es, den Manipulator optimiert aufzubauen und wirtschaftlich zu betreiben. Dennoch kann mit den entsprechenden Freiheitsgraden ein umfassendes Bewegungsspektrum für das Werkstückhandling abgedeckt werden.

Die Erfindung betrifft auch eine Biegeanlage umfassend eine Biegemaschine, zumindest einen Manipulator, eine Führungsanordnung mit einer Führungsachse, entlang welcher Führungsachse der zumindest eine Manipulator verfahrbar ist oder eine ortsfeste Verankerung für den zumindest einen Manipulator, und eine Anlagensteuerung, welche zum Vorgeben von Bewegungen und/oder Bewegungsabläufen des zumindest einen Manipulators ausgebildet ist. Dabei ist vorgesehen, dass der zumindest eine Manipulator gemäß wenigstens einem der vorstehend genannten Merkmale respektive gemäß den Definitionen in wenigstens einem der Manipulator-Ansprüche ausgebildet ist. Die Führungsanordnung umfasst dabei insbesondere eine linear verlaufende Schienenführung bzw. lineare Schienenelemente. Dabei können die linearen Schienenelemente bevorzugt parallel zu einer Längsachse des Biegetisches der Biegemaschine ausgerichtet sein, respektive kann die Führungsachse der Führungsanordnung parallel zur den Schienenelementen verlaufen.

Die erfindungsgemäße Ausbildung einer Biegeanlage ermöglicht eine effiziente Bearbeitung von Bauteilen, insbesondere von Biegeteilen. Mittels der erfindungsgemäß ausgebildeten Biegeanlage mit zumindest einem Manipulator ist nicht nur möglich, Schwenkbewegungen des Manipulators um horizontale Achsen ausführen, sondern es können zusätzlich auch rotatorische Bewegungen um zumindest zwei Rotationsachsen ausgeführt werden. Das hat den Vorteil, dass an Bauteilen, an welchen mehrere Bearbeitungsschritte, respektive mehrere Biegeschritte, durchzuführen sind, kein Ablegen und/oder Umgreifen erforderlich ist. Vor allem bei kleinen Bauteilen und auch bei Profilen ist der Einsatz des erfindungsgemäßen Manipulators zweckmäßig. Insbesondere ist es bei zu biegenden und vor allem bei mehrfach zu biegenden, kleinen Bauteilen und Profilen nicht erforderlich, zwischen den einzelnen Bearbeitungs- bzw. Biegeschritten umzugreifen. So werden die Bearbeitungszeiten verkürzt, was sich unter anderem positiv auf die Stückkosten auswirkt. Des Weiteren ermöglicht die erfindungsgemäße Ausbildung einer Biegeanlage ein vergleichsweise nahes Heranbewegen des Manipulators an die Biegemaschine, respektive an ein Unterwerkzeug, welches an einem Biegetisch angeordnet ist. Die quasi exzentrische bzw. versetzte Ausbildung der Greiferanordnung eines Manipulators ermöglicht ein nahes und gegebenenfalls sogar unmittelbares Heranführen der Greiferanordnung und des von der Greiferanordnung gehalterten Bauteiles an eine Biegemaschine, insbesondere an das Unterwerkzeug der Biegemaschine. Eine derartige Verlängerung ermöglicht das mehrstufige Bearbeiten bzw. Biegen eines Bauteiles ohne in der Regel zweitraubender Greiferumsetzungen.

Gemäß einer vorteilhaften Weiterbildung der Biegeanlage kann vorgesehen sein, dass die Biegemaschine einen Biegetisch und einen relativ zum Biegetisch verstellbaren Pressenbalken umfasst, und dass - in Draufsicht gesehen - innerhalb von äußeren Umgrenzungskanten des Biegetisches wenigstens ein Unterwerkzeug positioniert ist, an welchem Unterwerkzeug eine Bauteil-Abstützebene zur vertikalen Abstützung von wenigstens einem zu bearbeitenden Bauteil ausgebildet ist. Ein Bauteil kann von dem Manipulator auf einfache Art und Weise auf der Bauteil-Abstützebene des Unterwerkzeuges abgestützt werden und nachfolgend einem Bearbeitungsschritt durch den Pressenbalken unterzogen werden. Vorteilhafterweise sind die äußeren Umgrenzungskanten dabei in Draufsicht auf den Biegetisch ausgebildet.

Zum besseren Verständnis der Erfindung wird diese anhand der nachfolgenden Figuren näher erläutert.

Es zeigen jeweils in stark vereinfachter, schematischer Darstellung:
- Fig. 1: eine Biegeanlage mit einer Ausführungsvariante des Manipulators und einer Biegemaschine, wobei der Manipulator in zwei Arbeitspositionen dargestellt ist;
- Fig. 2: eine weitere Ausführungsvariante des Manipulators in Seitenansicht;
- Fig. 3: die Ausführungsvariante des Manipulators aus Fig. 2 mit einem Biegetisch und einem Unterwerkzeug in Frontansicht;
- Fig. 4: die Ausführungsvariante des Manipulators aus Fig. 2 mit einem Biegetisch und einem Unterwerkzeug in Seitansicht;
- Fig. 5: ein erstes Positionierbeispiel der Ausführungsvariante des Manipulators aus Fig. 2 in Aufsicht;
- Fig. 6: ein zweites Positionierbeispiel der Ausführungsvariante des Manipulators aus Fig. 2 in Aufsicht;
- Fig. 7: ein drittes Positionierbeispiel der Ausführungsvariante des Manipulators aus Fig. 2 in Aufsicht;
- Fig. 8: ein viertes Positionierbeispiel der Ausführungsvariante des Manipulators aus Fig. 2 in Aufsicht;
- Fig. 9: ein fünftes Positionierbeispiel der Ausführungsvariante des Manipulators aus Fig. 2 in Aufsicht;
- Fig. 10: ein sechstes Positionierbeispiel der Ausführungsvariante des Manipulators aus Fig. 2 in Aufsicht;
- Fig. 11: ein siebtes Positionierbeispiel der Ausführungsvariante des Manipulators aus Fig. 2 in Aufsicht;
- Fig. 12: eine weitere Ausführungsvariante des Manipulators in dreidimensionaler Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

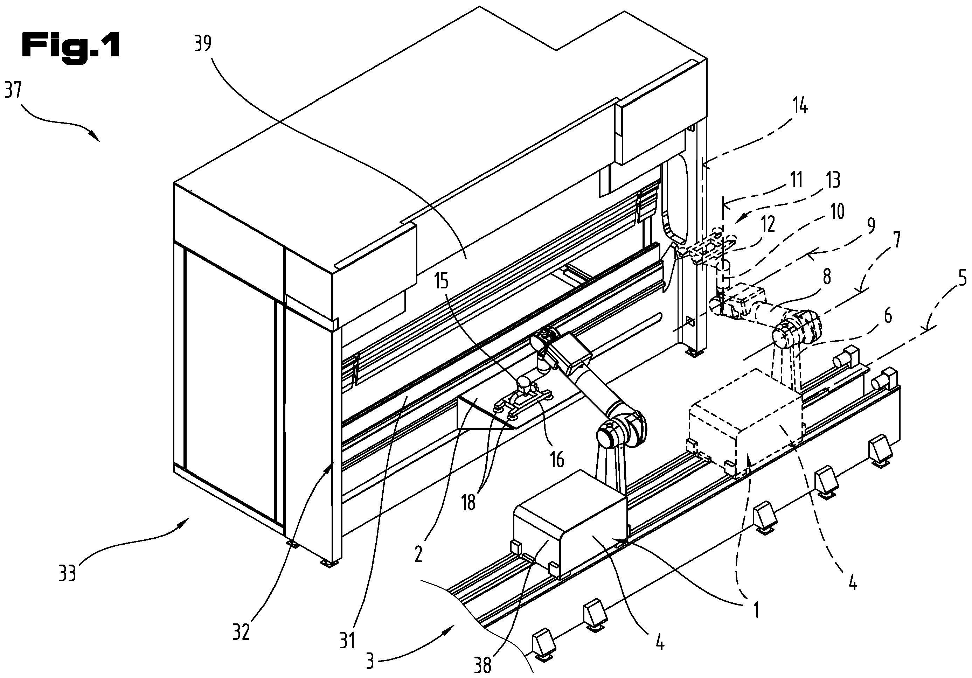

In der Figur 1 ist eine Biegeanlage 37 mit einer ersten Ausführungsvariante des erfindungsgemäßen Manipulators 1 und einer Biegemaschine 33 gezeigt. Der Manipulator 1 ist dabei beispielhaft in zwei verschiedenen Arbeitspositionen dargestellt. Die Biegeanlage 37 umfasst zudem eine Führungsanordnung 3 mit einer Führungsachse 38, entlang welcher Führungsachse 38 der zumindest eine Manipulator 1 verfahrbar ist. Alternativ ist der zumindest eine Manipulator 1 mit einer ortsfesten Verankerung ausgebildet. Des Weiteren ist eine - nicht bildlich dargestellte - Anlagensteuerung vorgesehen, welche zum Vorgeben von Bewegungen und/oder Bewegungsabläufen des Manipulators 1 ausgebildet ist.

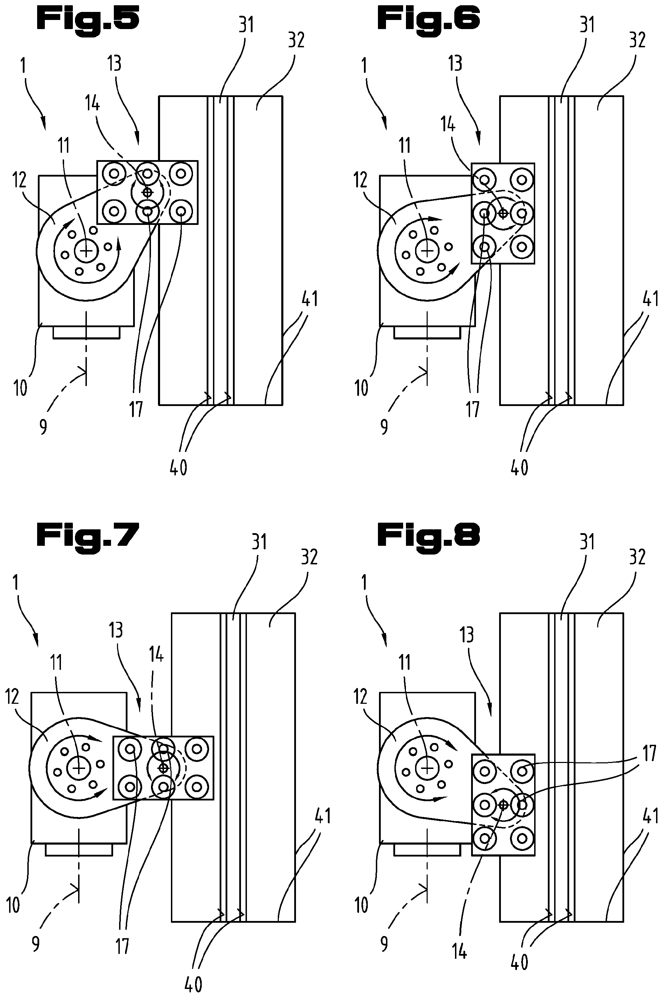

Die Biegemaschine 33 kann, wie dargestellt ist, einen Biegetisch 32 und einen relativ zum Biegetisch 32 verstellbaren Pressenbalken 39 umfassen. Innerhalb von äußeren Umgrenzungskanten 41 des Biegetisches 32 kann in Bezug auf die Draufsicht gemäß den nachfolgenden Figuren 5-11 wenigstens ein Unterwerkzeug 31 positioniert sein, auf welchem eine Bauteil-Abstützebene 40 zur vertikalen Abstützung von wenigstens einem zu bearbeitenden Bauteil ausgebildet sein kann.

Der erfindungsgemäße Manipulator 1 ist dazu ausgebildet, Bauteile 2, insbesondere Blechteile, aufzugreifen, zu transportieren, zu halten und/oder abzulegen. Entlang der Führungsanordnung 3 ist ein Basiskörper 4 des Manipulators 1 verfahrbar ausgebildet. Der Manipulator 1 umfasst einen über eine horizontale erste Schwenkachse 5 mit dem Basiskörper 4, schwenkbar gekoppelten ersten Schwenkarm 6, einen über eine horizontale zweite Schwenkachse 7 mit dem ersten Schwenkarm 6 schwenkbar gekoppelten zweiten Schwenkarm 8 und einen über eine horizontale dritte Schwenkachse 9 mit dem zweiten Schwenkarm 6 schwenkbar gekoppelten dritten Schwenkarm 10. Am dritten Schwenkarm 10 ist eine radial zur dritten Schwenkachse 9 verlaufende erste Rotationsachse 11 ausgebildet. Über die erste Rotationsachse 11 ist ein mit dem dritten Schwenkarm 10 rotierbar gekoppelter Greifertragarm 12 ausgebildet. Dabei verläuft der Greifertragarm 12 radial zur ersten Rotationsachse 11. Es ist zudem eine Greiferanordnung 13 ausgebildet, welche über eine zweite Rotationsachse 14, welche von der ersten Rotationsachse 11 beabstandet ist, mit dem Greifertragarm 12 rotierbar gekoppelt ist.

In der Figur 1 ist auch gezeigt, dass die erste Rotationsachse 11 und die zweite Rotationsachse 14 zueinander parallel ausgebildet sein können. Es kann auch sein, dass die Greiferanordnung 13 ein am Greifertragarm 12 rotierbar gelagertes Basiselement 15 und ein mit dem Basiselement 15 bedarfsweise koppelbares, insbesondere werkzeuglos wechselbares, Greiferelement 16 umfasst. Es ist auch möglich, jedoch in den Figuren nicht dargestellt, dass das Greiferelement 16 einen Zangengreifer und/oder einen Magnetgreifer umfasst. Es ist zudem gezeigt, dass das Greiferelement 16 einen Unterdruckgreifer 17 umfassen kann, an welchem eines oder mehrere Unterdruck-Greiferelemente 18 ausgebildet sind. Dargestellt sind beispielhaft vier an einem Greiferelement 16 symmetrisch angeordnete Unterdruck-Greiferelemente 18. Zudem kann es sein, dass eine Tragarmlänge 36 des Greifertragarms 12, welche sich zwischen der ersten Rotationsachse 11 und der zweiten Rotationsachse 14 erstreckt, kürzer ist als eine Länge des ersten, zweiten und/oder dritten Schwenkarmes 6, 8, 10.

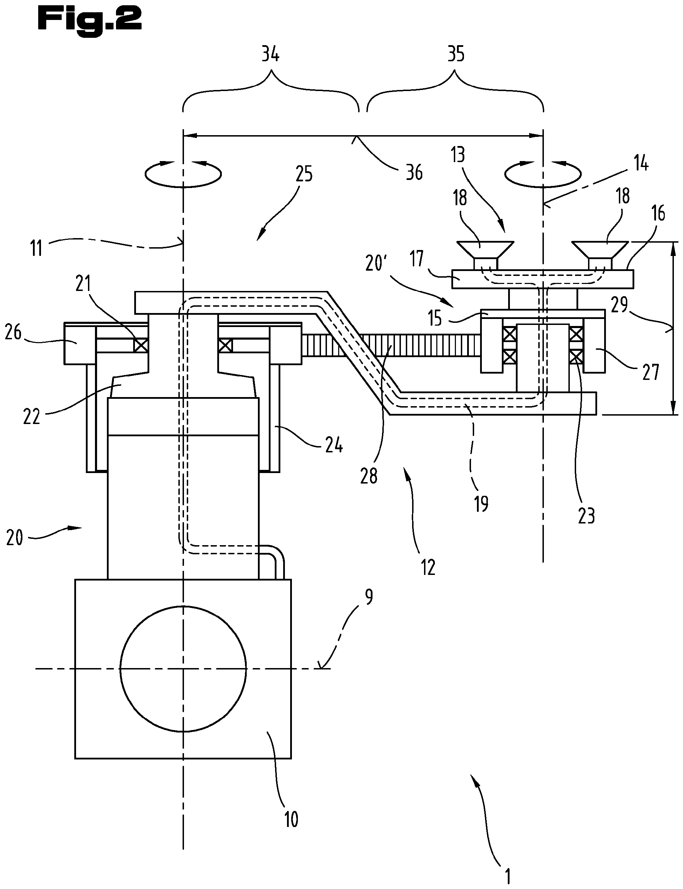

Die Figur 2 zeigt eine zweite Ausführungsvariante des Manipulators 1 in Seitenansicht. Grundsätzlich ist in der Figur 2 eine weitere und gegebenenfalls für sich eigenständige Ausführungsform des Manipulators 1 gezeigt, wobei für gleiche Teile gleiche Bezugszeichen bzw. Bauteilbezeichnungen wie in der vorangegangenen Figur 1 verwendet werden. Um unnötige Wiederholungen zu vermeiden, wird daher auf die detaillierte Beschreibung in der vorangegangenen Figur 1 hingewiesen bzw. Bezug genommen.

Der in der Figur 2 schematisch dargestellte, erfindungsgemäße Manipulator 1 ist dazu ausgebildet, Bauteile 2, insbesondere Blechteile, aufzugreifen, zu transportieren, zu halten und/oder abzulegen. Der Manipulator 1 ist in der Figur 2 nicht ganzheitlich dargestellt, sondern zur besseren Übersicht beginnend mit seinem dritten Schwenkarm 10, welcher über die dritte Schwenkachse 9 mit einem - nicht mehr dargestellten - zweiten Schwenkarm 8 gekoppelt ist. Explizit nicht dargestellt, bzw. ausgeblendet sind zudem ein erster Schwenkarm 6, welcher über eine horizontale erste Schwenkachse 5 mit einem Basiskörper 4 schwenkbar gekoppelt ist und ein zweiten Schwenkarm 8, welcher über eine horizontale zweite Schwenkachse 7 mit dem ersten Schwenkarm 6 schwenkbar gekoppelt ist. Am dritten Schwenkarm 10 ist radial zur dritten Schwenkachse 9 verlaufend eine erste Rotationsachse 11 ausgebildet. Über die erste Rotationsachse 11 ist ein mit dem dritten Schwenkarm 10 rotierbar gekoppelter Greifertragarm 12 ausgebildet. Dabei verläuft der Greifertragarm 12 radial zur ersten Rotationsachse 11. Es ist zudem eine Greiferanordnung 13 ausgebildet, welche über eine zweite Rotationsachse 14, welche von der ersten Rotationsachse 11 beabstandet ist, mit dem Greifertragarm 12 rotierbar gekoppelt ist.

Es kann sein, dass die erste Rotationsachse 11 und die zweite Rotationsachse 14 zueinander parallel ausgebildet sind. Des Weiteren kann, wie dargestellt, vorgesehen sein, dass die Greiferanordnung 13 ein am Greifertragarm 12 rotierbar gelagertes Basiselement 15 und ein mit dem Basiselement 15 bedarfsweise koppelbares, insbesondere werkzeuglos wechselbares, Greiferelement 16 umfasst. Bei dem Greiferelement 16 kann es sich beispielsweise um einen Zangengreifer, Magnetgreifer und/oder einen Unterdruckgreifer 17 handeln. In der Figur 2 dargestellt ist ein Unterdruckgreifer 17, an welchem mehrere Unterdruck-Greiferelemente 18 angeordnet sein können. Hierbei ist gezeigt, dass eine Unterdruckleitung 19 ausgebildet sein kann. Diese kann im Übergangsabschnitt 20 zwischen dem dritten Schwenkarm 10 und dem Greifertragarm 12 und/oder im Übergangsabschnitt 20' zwischen dem Greifertragarm 12 und der Greiferanordnung 13 als Drehdurchführung ausgebildet sein.

Der Greifertragarm 12 kann über eine bedarfsweise aktivier- und deaktivierbare Kupplung 22 mit dem dritten Schwenkarm 10 und mittels eines ersten Drehlagers 21 drehbar gekoppelt sein. Die Greiferanordnung 13 kann mit dem Greifertragarm 12 mittels eines zweiten Drehlagers 23 drehbar gekoppelt sein. In der Figur 2 ist auch gezeigt, dass am dritten Schwenkarm 10 eine Momentenstütze 24 angeordnet sein kann, welche bevorzugt lösbar sein kann.

Es ist auch gezeigt, dass ein Zahnriemengetriebe 25 ausgebildet sein kann, welches eine bewegungskoppelnde Verbindung zwischen dem Greifertragarm 12 und der Greiferanordnung 13 hergestellt. Dargestellt sind ein erstes Zahnrad 26, welches um die erste Rotationsachse 11 rotierbar ist und ein zweites Zahnrad 27, welches um die zweite Rotationsachse 14 rotierbar ist. Zudem kann ein das erste Zahnrad 26 und das zweite Zahnrad 27 bewegungskoppelnder Riemen 28 ausgebildet sein. Es sei darauf hingewiesen, dass dieses in der Figur 2 vereinfacht dargestellte Zahnriemengetriebe 25 lediglich ein Ausführungsbeispiel dargestellt und dass selbstverständlich noch weitere vorteilhafte und dem Fachmann bekannte konstruktive Ausgestaltungen denkbar und möglich sind. Das erste Zahnrad 26 kann dabei einen größeren Durchmesser aufweisen, als das zweite Zahnrad 27. Durch die Verbindung mittels des bewegungskoppelnden Riemens 28 kann eine Bewegung des ersten Zahnrades 26 dabei grundsätzlich immer zu einer Bewegung des zweiten Zahnrades 27 führen. Es ist jedoch auch denkbar und gegebenenfalls vorteilhaft, wenn eine Entkoppelung des ersten Zahnrades 26 und des zweiten Zahnrades 27 erfolgen kann.

Alternativ kann zudem ein - nicht figürlich dargestelltes - Stirnradgetriebe ausgebildet sein, welches zur Einstellung der Winkelposition der Greiferanordnung 13 ausgebildet sein kann. Ein gattungsgemäßes Stirnradgetriebe kann ein erstes Stirnrad umfassen, welches um die erste Rotationsachse 11 rotierbar ist und ein zweites Stirnrad umfassen, welches um die zweite Rotationsachse 14 rotierbar ist, wobei das erste und das zweite Stirnrad direkt oder indirekt bewegungsgekoppelt zusammenwirken.

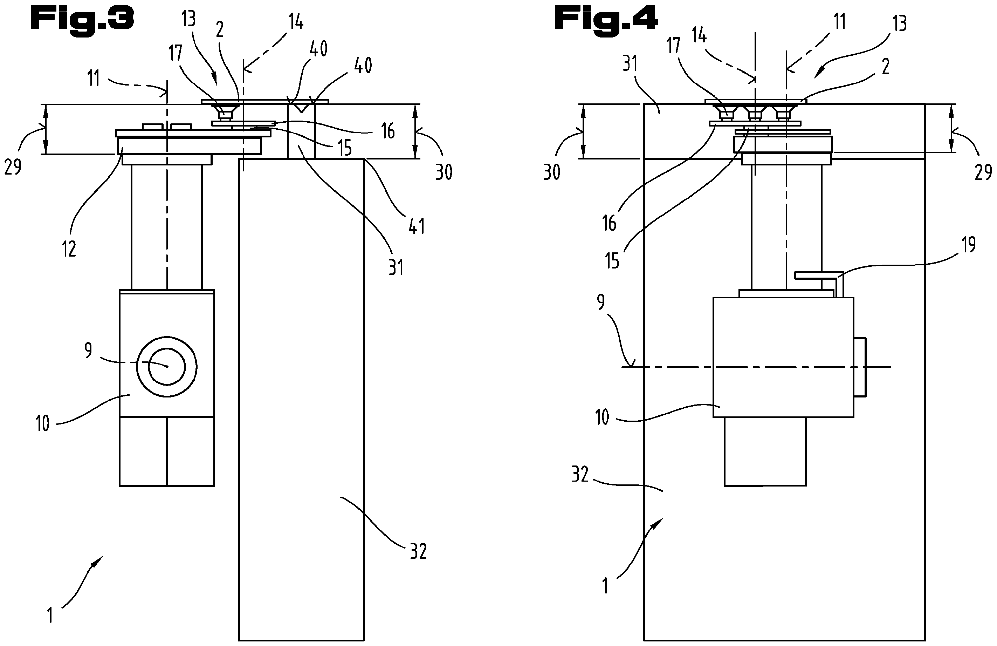

Eine größte Höhe 29 des Greifertragarms 12 kann inklusive der auf dem Greifertragarm 12 gehalterten Greiferanordnung 13 geringer sein, als eine Aufbauhöhe 30 eines Unterwerkzeuges 31 gegenüber einem Biegetisch 32 einer Biegemaschine 33. Insbesondere kann die größte Höhe 29 maximal 150 mm betragen, vorzugsweise maximal 100 mm betragen. Die Aufbauhöhe 30 des Unterwerkzeuges 31 gegenüber dem Biegetisch 32 einer Biegemaschine 33 ist in den Figuren 3 und 4 gezeigt.

Der Greifertragarm 12 kann einen ersten Tragarmabschnitt 34 und einen zweiten Tragarmabschnitt 35 aufweisen, wobei der erste Tragarmabschnitt 34 und der zweiten Tragarmabschnitt 35 in Richtung der ersten Rotationsachse 11 oder zweiten Rotationsachse 14 zueinander versetzt angeordnet sein können. Vorteilhafterweise können der erste und der zweite Tragarmabschnitt 34,35 wie in der Figur 2 gezeigt ist, derart zueinander versetzt sein, dass der zweite Tragarmabschnitt 35 bezogen auf eine horizontale Position des Greifertragarms 12 tiefer liegt, als der erste Tragarmabschnitt 34. So kann sind eine geringe größte Höhe 29 ergeben.

Die beiden Figuren 3 und 4 zeigen eine dritte Ausführungsvariante des Manipulators 1 mit einem Biegetisch 32 und einem Unterwerkzeug 31 in Frontansicht bzw. in Seitenansicht. Grundsätzlich ist in den Figuren 3 und 4 eine weitere und gegebenenfalls für sich eigenständige Ausführungsform des Manipulators 1 gezeigt, wobei für gleiche Teile gleiche Bezugszeichen bzw. Bauteilbezeichnungen wie in der vorangegangenen Figuren 1 und 2 verwendet werden. Um unnötige Wiederholungen zu vermeiden, wird daher auf die detaillierte Beschreibung in den vorangegangenen Figuren hingewiesen bzw. Bezug genommen.

Der in den Figuren 3 und 4 dargestellte, erfindungsgemäße Manipulator 1 ist dazu ausgebildet, Bauteile 2, insbesondere Blechteile, aufzugreifen, zu transportieren, zu halten und/oder abzulegen. Der Manipulator 1 ist in den Figuren 3 und 4 nicht ganzheitlich dargestellt, sondern zur besseren Übersicht lediglich beginnend mit seinem dritten Schwenkarm 10, welcher über die dritte Schwenkachse 9 mit einem - nicht dargestellten - zweiten Schwenkarm 8 gekoppelt ist. Am dritten Schwenkarm 10 ist radial zur dritten Schwenkachse 9 verlaufend eine erste Rotationsachse 11 ausgebildet. Über die erste Rotationsachse 11 ist ein mit dem dritten Schwenkarm 10 rotierbar gekoppelter Greifertragarm 12 ausgebildet. Dabei verläuft der Greifertragarm 12 radial zur ersten Rotationsachse 11. Es ist zudem eine Greiferanordnung 13 ausgebildet, welche über eine zweite Rotationsachse 14, welche von der ersten Rotationsachse 11 beabstandet ist, mit dem Greifertragarm 12 rotierbar gekoppelt ist.

Der dargestellte Manipulator 1, sowie der dargestellte Biegetisch 32 mit einem darauf montierten Unterwerkzeug 31 sind dabei Bestandteil einer Biegemaschine 33, welche wiederum Teil einer Biegeanlage 37 ist. Die Biegeanlage 37 kann zudem eine - in der Figur 1 dargestellte - Führungsanordnung 3 mit einer Führungsachse 38 oder eine ortsfeste Verankerung für den zumindest einen Manipulator 1 umfassen und weist eine Anlagensteuerung auf.

Die Biegemaschine 33 kann, wie dargestellt ist, einen Biegetisch 32 und einen relativ zum Biegetisch 32 verstellbaren Pressenbalken 39 umfassen. Der Pressenbalken 39 ist beispielsweise in der Figur 1 dargestellt. Innerhalb von äußeren Umgrenzungskanten 41 des Biegetisches 32 kann in Bezug auf die Draufsicht gemäß den nachfolgenden Figuren 5-11 wenigstens ein Unterwerkzeug 31 positioniert sein, auf welchem eine Bauteil-Abstützebene 40 zur vertikalen Abstützung von wenigstens einem zu bearbeitenden Bauteil vorgesehen sein kann.

Eine größte Höhe 29 des Greifertragarms 12 inklusive der auf dem Greifertragarm 12 gehalterten Greiferanordnung 13 kann geringer sein, als eine Aufbauhöhe 30 eines Unterwerkzeuges 31 gegenüber einem Biegetisch 32 einer Biegemaschine 33. Insbesondere kann die größte Höhe 29 maximal 150 mm betragen, vorzugsweise maximal 100 mm betragen.

Die Figuren 5 bis 11 zeigen sieben Positionierbeispiele einer vierten Ausführungsvariante des Manipulators 1 in Aufsicht. Der dargestellte, erfindungsgemäße Manipulator 1 ist dazu ausgebildet, Bauteile 2, insbesondere Blechteile, aufzugreifen, zu transportieren, zu halten und/oder abzulegen. Um die Positionierbarkeit der Anordnung zu veranschaulichen, ist das Bauteil 2 in den Figuren 5 bis 11 nicht dargestellt. Wie schon in den vorhergehenden Figuren ist der Manipulator 1 in den Figuren 5 bis 11 nicht ganzheitlich dargestellt, sondern zur besseren Übersicht beginnend mit seinem dritten Schwenkarm 10, welcher über die dritte Schwenkachse 9 mit einem - nicht mehr dargestellten zweiten Schwenkarm 8 gekoppelt ist. Am dritten Schwenkarm 10 ist radial zur dritten Schwenkachse 9 verlaufend eine erste Rotationsachse 11 ausgebildet. Über die erste Rotationsachse 11 ist ein mit dem dritten Schwenkarm 10 rotierbar gekoppelter Greifertragarm 12 ausgebildet. Dabei verläuft der Greifertragarm 12 radial zur ersten Rotationsachse 11. Es ist zudem eine Greiferanordnung 13 ausgebildet, welche über eine zweite Rotationsachse 14, welche von der ersten Rotationsachse 11 beabstandet ist, mit dem Greifertragarm 12 rotierbar gekoppelt ist. In den Figuren 5 bis 11 ist auch ein Biegetisch 32 einer Biegemaschine 33 gezeigt, wobei auf dem Biegetisch 32 ein Unterwerkzeug 31 angeordnet bzw. montiert ist.

Die Biegemaschine 33 kann, wie dargestellt ist, einen Biegetisch 32 und einen relativ zum Biegetisch 32 verstellbaren Pressenbalken 39 umfassen. Der Pressenbalken 39 ist beispielsweise in der Figur 1 dargestellt. Innerhalb von äußeren Umgrenzungskanten 41 des Biegetisches 32 kann in Bezug auf die Draufsicht wenigstens ein Unterwerkzeug 31 positioniert sein, auf welchem eine Bauteil-Abstützebene 40 zur vertikalen Abstützung von wenigstens einem zu bearbeitenden Bauteil vorgesehen sein kann.

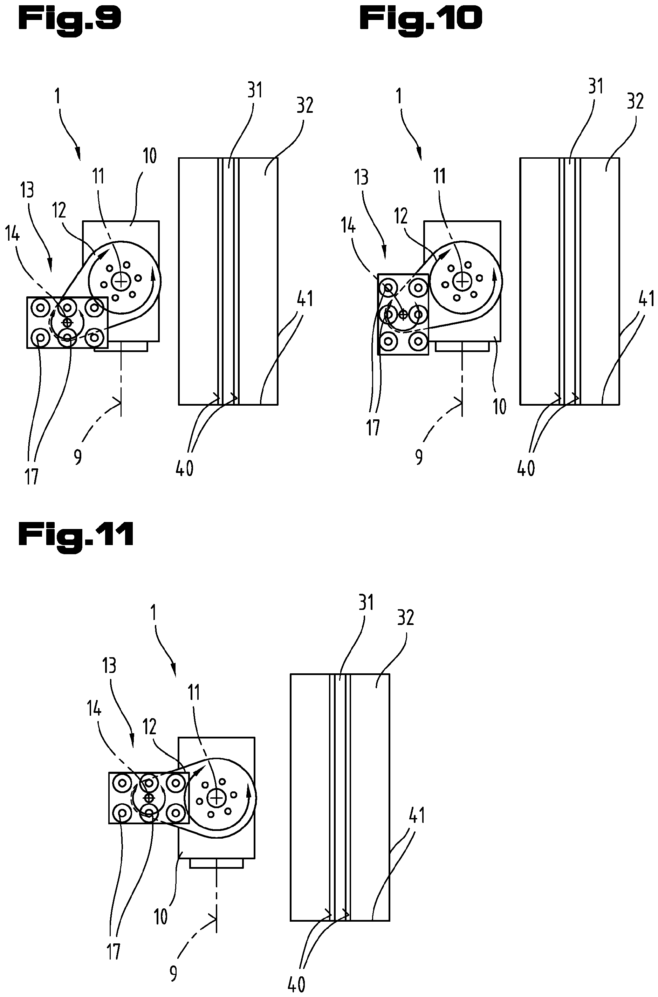

Die Figuren 5 bis 8 zeigen Positionierbeispiele einer Greiferanordnung 13, welche mit einem Unterdruckgreifer 17 mit insgesamt sechs Unterdruck-Greiferelementen 18 angeordnet sein kann. In der Figur 5 ist die Greiferanordnung 13 in einem Winkel von 0° bezogen auf das Unterwerkzeug 31 ausgerichtet. In den folgenden Figuren 6 bis 8 erfolgte eine Drehbewegung der Greiferanordnung 13 um die zweite Rotationsachse 14. Diese Drehbewegung erfolgte in der Figur 6 um einen Winkel von 90°, in der Figur 7 um 180° und in der Figur 8 um 270°. Hierbei wird ersichtlich, dass sich der Greifertragarm 12, während sich die Greiferanordnung 13 zwischen der Position gemäß Figur 5 und der Position gemäß Figur 8 um etwa 270° um die zweite Rotationsachse 14 dreht, selbst lediglich eine Drehbewegung um die erste Rotationsachse 11 von nur etwa 90° ausführen muss. Dies kann insbesondere dadurch realisiert werden, dass ein Zahnriemengetriebe 25 ausgebildet ist, ein erstes Zahnrad 26 umfasst, welches um die erste Rotationsachse 11 rotierbar ist und ein zweites Zahnrad 27 umfasst, welches um die zweite Rotationsachse 14 rotierbar ist. Das Zahnriemengetriebe 25 kann einen das erste Zahnrad 26 und das zweite Zahnrad 27 bewegungskoppelnden Riemen 28 umfassen. Ein gewünschtes Übersetzungsverhältnis zwischen dem ersten Zahnrad 26 und dem zweiten Zahnrad 27 kann technisch dadurch realisiert werden, dass das erste Zahnrad 26 einen größeren Durchmesser aufweist als das zweite Zahnrad 27. In den Figuren 9 bis 11 ist auch gezeigt, dass bedarfsweise auch jene beiden Winkelbereichsquadranten mit der Greiferanordnung 13 erreichbar sind, welche vom Biegetisch 32 abgewandt sind. Zwischen den Figuren 9 bis 11 vollführt der Greifertragarm 12 eine vergleichsweise geringe Rotationsbewegung von etwa 45°, während sich die Greiferanordnung 13 um 180° dreht.

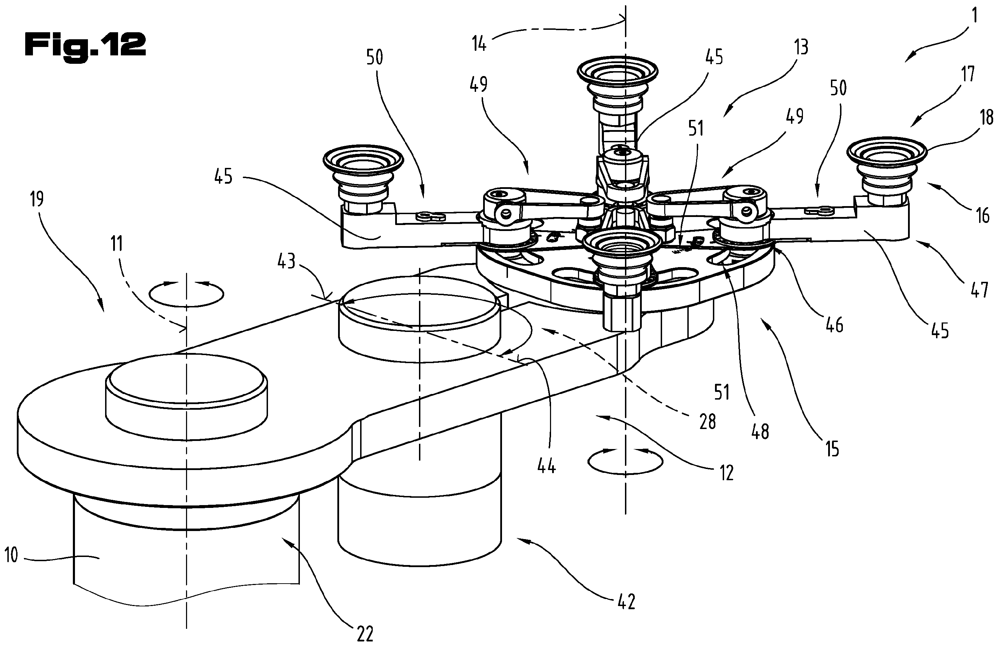

In der Figur 12 ist eine weitere vorteilhafte Ausführungsvariante gezeigt, bei welcher ein erster, nicht abgebildeter, Drehantrieb zum Rotieren des Greifertragarms 12 um die erste Rotationsachse 11 ausgebildet sein kann und bei welcher ein von dem ersten Drehantrieb unabhängig wirkender zweiter Drehantrieb 42 zum Rotieren der Greiferanordnung 13 um die zweite Rotationsachse 14 ausgebildet sein kann. Grundsätzlich sei hier, um Wiederholungen zu vermeiden, erneut auf die vorausgegangene Beschreibung der Figur 2 verwiesen. Bei der Ausführungsvariante gemäß der Figur 12 kann der zweite Drehantrieb 42 als elektromotorischer Aktor oder als pneumatischer Aktor ausgebildet und am Greifertragarm 12 befestigt sein. Dabei kann der zweite Drehantrieb 42 beispielsweise mittels eines Riemens 28 mit der Greiferanordnung 13 bewegungsgekoppelt sein. Bevorzugt ist ein elektromotorische Aktor als Schrittmotor ausgebildet. Der zweite Drehantrieb 42 kann zum Rotieren der Greiferanordnung 13 zwischen einem ersten Endanschlag 43 und einem zweiten Endanschlag 44 ausgebildet sein, wobei zwischen dem ersten Endanschlag 43 und dem zweiten Endanschlag 44 bevorzugt eine Rotationsbewegung um bis zu 180° erfolgen kann.

Des Weiteren zeigt die Figur 12, dass das Basiselement 15 mit zumindest zwei Greiferelement-Tragarmen 45 jeweils einen ersten Endabschnitt 46 und jeweils einen zweiten Endabschnitt 47 aufweisen kann. Die Greiferelement-Tragarme 45 können dabei radial zur zweiten Rotationsachse 14 beabstandet sein, und an ihrem ersten Endabschnitt 46 in vorzugsweise bogenförmigen Führungsabschnitten 48 im Basiselement 15 der Greiferanordnung 13 manuell oder automatisiert verstellbar geführt und lösbar fixiert sein. Insbesondere, wenn die Verstellung manuell erfolgen kann, kann es zweckmäßig sein, wenn im Nahbereich der Führungsabschnitte 48, bevorzugt im Basiselement 15, eine Skala 51 zur vorgesehen ist, mittels welcher eine präzisiere Einstellbarkeit ermöglicht wird. Hierbei können die Greiferelement-Tragarme 45 an ihrem zweiten Endabschnitt 47 ein Greiferelement 16 aufweisen. Natürlich wäre eine solche Weiterbildung nicht zwingend an das Beispiel der Figur 12 gekoppelt, sondern könnte beispielsweise auch in der Anordnung gemäß Figur 2 zum Einsatz kommen.

Dabei können die zumindest zwei Greiferelement-Tragarme 45, bevorzugt im Bereich ihres jeweiligen ersten Endabschnitts 46, einen Fixiermittel 49 aufweisen, welches zur lösbaren Fixierung der zumindest zwei Greiferelement-Tragarme 45 gegenüber mit dem Basiselement 15 ausgebildet sein kann. Dieses Fixiermittel 49 ist in der Figur 12 beispielhaft als bügelförmiger Hebel gezeigt und in einer mit dem Basiselement 15 lösbar fixierten Position gezeigt.

Eine Unterdruckleitung 19 des zumindest einen Unterdruck-Greiferelements 18 kann mit einem fluidischen Absperrelement 50, beispielsweise mit einem Absperrventil, ausgebildet sein. Ein solches Absperrelement 50 kann - wie in der Figur 12 gezeigt - an bzw. in einem Greiferelement-Tragarm 45 ausgebildet sein. Ein Absperrelement 50 kann aber beispielsweise auch in dem Basiselement 15 oder im Nahbereich eines Unterdruck-Greiferelements 18 oder eines Saugnapfs eines Unterdruck-Greiferelements 18 ausgebildet sein.

Der Manipulator 1 kann in Bezug auf seine Schwenkachsen ausschließlich die genannte horizontale erste Schwenkachse 5 die genannte horizontale zweite Schwenkachse 7, die genannte horizontale dritte Schwenkachse 9, die genannte erste Rotationsachse 11, und die genannte zweite Rotationsachse 14 aufweisen. Dies kann natürlich für sämtliche in den Figuren gezeigten Ausführungsbeispiele gleichermaßen vorteilhaft sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Manipulator | 30 | Aufbauhöhe |
| | | 31 | Unterwerkzeug |
| 2 | Bauteil | 32 | Biegetisch |
| 3 | Führungsanordnung | 33 | Biegemaschine |
| 4 | Basiskörper | 34 | erster Tragarmabschnitt |
| 5 | erste Schwenkachse | 35 | zweiter Tragarmabschnitt |
| 6 | erster Schwenkarm | 36 | Tragarmlänge |
| 7 | zweite Schwenkachse | 37 | Biegeanlage |
| 8 | zweiter Schwenkarm | 38 | Führungsachse |
| 9 | dritte Schwenkachse | 39 | Pressenbalken |
| 10 | dritter Schwenkarm | 40 | Bauteil-Abstützebene |
| 11 | erste Rotationsachse | 41 | Umgrenzungskante |
| 12 | Greifertragarm | 42 | zweiter Drehantrieb |
| 13 | Greiferanordnung | 43 | erster Endanschlag |
| 14 | zweite Rotationsachse | 44 | zweiter Endanschlag |
| 15 | Basiselement | 45 | Greiferelement-Tragarm |
| 16 | Greiferelement | 46 | erster Endabschnitt |
| 17 | Unterdruckgreifer | 47 | zweiter Endabschnitt |
| 18 | Unterdruck-Greiferelement | 48 | Führungsabschnitt |
| 19 | Unterdruckleitung | 49 | Fixiermittel |
| 20 , 20' | Übergangsabschnitt | 50 | Absperrelement |
| 21 | erstes Drehlager | 51 | Skala |
| 22 | Kupplung | | |
| 23 | zweites Drehlager | | |
| 24 | Momentenstütze | | |
| 25 | Zahnriemengetriebe | | |
| 26 | erstes Zahnrad | | |
| 27 | zweites Zahnrad | | |
| 28 | Riemen | | |
| 29 | Höhe | | |

## Patentansprüche

1. Manipulator (1) für Bauteile (2), insbesondere für Blechteile, wobei der Manipulator (1) dazu ausgebildet ist ein Bauteil (2) aufzugreifen, zu transportieren, zu halten und/oder abzulegen, umfassend
- einen ortsfest montierbaren oder entlang einer Führungsanordnung (3) verfahrbaren Basiskörper (4),
- einen über eine horizontale erste Schwenkachse (5) mit dem Basiskörper (4), schwenkbar gekoppelten ersten Schwenkarm (6),
- einen über eine horizontale zweite Schwenkachse (7) mit dem ersten Schwenkarm (6) schwenkbar gekoppelten zweiten Schwenkarm (8),
- einen über eine horizontale dritte Schwenkachse (9) mit dem zweiten Schwenkarm (6) schwenkbar gekoppelten dritten Schwenkarm (10),
- wobei am dritten Schwenkarm (10) eine radial zur dritten Schwenkachse (9) verlaufende erste Rotationsachse (11) ausgebildet ist,
**dadurch gekennzeichnet, dass**
ein über die erste Rotationsachse (11) mit dem dritten Schwenkarm (10) rotierbar gekoppelter Greifertragarm (12) ausgebildet ist, wobei der Greifertragarm (12) radial zur ersten Rotationsachse (11) verläuft und wobei eine Greiferanordnung (13) über eine zweite Rotationsachse (14), welche von der ersten Rotationsachse (11) beabstandet ist, mit dem Greifertragarm (12) rotierbar gekoppelt ist.

2. Manipulator (1) nach Anspruch 1, **dadurch gekennzeichnet, dass** die erste Rotationsachse (11) und die zweite Rotationsachse (14) zueinander parallel ausgebildet sind.

3. Manipulator (1) nach einem der Ansprüche 1 oder 2, **dadurch gekennzeichnet, dass** die Greiferanordnung (13) ein am Greifertragarm (12) rotierbar gelagertes Basiselement (15) und ein mit dem Basiselement (15) bedarfsweise koppelbares, insbesondere werkzeuglos wechselbares, Greiferelement (16) umfasst.

4. Manipulator (1) nach Anspruch 3, **dadurch gekennzeichnet, dass** das Greiferelement (16) einen Zangengreifer und/oder einen Magnetgreifer umfasst.

5. Manipulator (1) nach Anspruch 3 oder 4, **dadurch gekennzeichnet, dass** das Greiferelement (16) einen Unterdruckgreifer (17) umfasst und dass zumindest ein Unterdruck-Greiferelement (18) an dem Unterdruckgreifer (17) ausgebildet ist.

6. Manipulator (1) nach Anspruch 5, **dadurch gekennzeichnet, dass** eine Unterdruckleitung (19) ausgebildet ist, welche im Übergangsabschnitt (20) zwischen dem dritten Schwenkarm (10) und dem Greifertragarm (12) und/oder im Übergangsabschnitt (20') zwischen dem Greifertragarm (12) und der Greiferanordnung (13) als Drehdurchführung ausgebildet ist.

7. Manipulator (1) nach einem der vorhergehenden Ansprüche, **dadurch gekennzeichnet, dass** der Greifertragarm (12) über eine bedarfsweise aktivier- und deaktivierbare Kupplung (22) mit dem dritten Schwenkarm (10) und mittels eines ersten Drehlagers (21) drehbar gekoppelt ist.

8. Manipulator (1) nach einem der vorhergehenden Ansprüche, **dadurch gekennzeichnet, dass** die Greiferanordnung (13) mit dem Greifertragarm (12) mittels eines zweiten Drehlagers (23) drehbar gekoppelt ist.

9. Manipulator (1) nach einem der vorhergehenden Ansprüche, **dadurch gekennzeichnet, dass** am dritten Schwenkarm (10) eine Momentenstütze (24) rotationsfest angeordnet ist, bevorzugt eine lösbar ausgebildete Momentenstütze (24) ausgebildet ist.

10. Manipulator (1) nach einem der vorhergehenden Ansprüche, **dadurch gekennzeichnet, dass** ein Zahnriemengetriebe (25) ausgebildet ist, welches Zahnriemengetriebe (25) ein erstes Zahnrad (26) umfasst, welches relativ zur ersten Rotationsachse (11) drehfest ist und ein zweites Zahnrad (27) umfasst, welches um die zweite Rotationsachse (14) rotierbar ist, und welches Zahnriemengetriebe (25) einen das erste Zahnrad (26) und das zweite Zahnrad (27) bewegungskoppelnden Riemen (28) umfasst.

11. Manipulator (1) nach Anspruch 10, **dadurch gekennzeichnet, dass** das erste Zahnrad (26) einen größeren Durchmesser aufweist als das zweite Zahnrad (27).

12. Manipulator (1) nach einem der Ansprüche 1 bis 9, **dadurch gekennzeichnet, dass** ein erster Drehantrieb zum Rotieren des Greifertragarms (12) um die erste Rotationsachse (11) ausgebildet ist und dass ein von dem ersten Drehantrieb unabhängig wirkender zweiter Drehantrieb (42) zum Rotieren der Greiferanordnung (13) um die zweite Rotationsachse (14) ausgebildet ist.

13. Manipulator (1) nach Anspruch 12, **dadurch gekennzeichnet, dass** der zweite Drehantrieb (42) als elektromotorischer Aktor ausgebildet ist, bevorzugt als Schrittmotor ausgebildet ist, oder dass der zweite Drehantrieb (42) als pneumatischer Aktor ausgebildet ist, und dass der zweite Drehantrieb (42) am Greifertragarm (12) befestigt ist.

14. Manipulator (1) nach Anspruch 12 oder 13, **dadurch gekennzeichnet, dass** der zweite Drehantrieb (42) zum Rotieren der Greiferanordnung (13) zwischen einem ersten Endanschlag (43) und einem zweiten Endanschlag (44) ausgebildet ist, wobei zwischen dem ersten Endanschlag (43) und dem zweiten Endanschlag (44) eine Rotationsbewegung ausführbar ist, bevorzugt eine Rotationsbewegung um bis zu 180° ausführbar ist.

15. Manipulator nach einem der Ansprüche 1 bis 9, **dadurch gekennzeichnet, dass** ein Stirnradgetriebe ausgebildet ist, welches Stirnradgetriebe ein erstes Stirnrad umfasst, welches um die erste Rotationsachse (11) rotierbar ist und ein zweites Stirnrad umfasst, welches um die zweite Rotationsachse (14) rotierbar ist, wobei das erste und das zweite Stirnrad direkt oder indirekt bewegungsgekoppelt zusammenwirken.

16. Manipulator (1) nach einem der vorhergehenden Ansprüche, **dadurch gekennzeichnet, dass** eine größte Höhe (29) des auskragenden Abschnittes des Greifertragarms (12) inklusive der auf dem Greifertragarm (12) gehalterten Greiferanordnung (13) geringer ist, als eine Aufbauhöhe (30) eines Unterwerkzeuges (31) gegenüber einem Biegetisch (32) einer Biegemaschine (33), insbesondere maximal 150 mm beträgt, vorzugsweise maximal 100 mm beträgt.

17. Manipulator (1) nach einem der vorhergehenden Ansprüche, **dadurch gekennzeichnet, dass** der Greifertragarm (12) einen ersten Tragarmabschnitt (34) und einen zweiten Tragarmabschnitt (35) aufweist, wobei der erste Tragarmabschnitt (34) und der zweiten Tragarmabschnitt (35) in Richtung der ersten Rotationsachse (11) oder zweiten Rotationsachse (14) zueinander versetzt angeordnet sind.

18. Manipulator (1) nach einem der vorhergehenden Ansprüche, **dadurch gekennzeichnet, dass** eine Tragarmlänge (36) des Greifertragarms (12), welche Tragarmlänge (36) sich zwischen der ersten Rotationsachse (11) und der zweiten Rotationsachse (14) erstreckt, kürzer ist als eine Länge des ersten, zweiten und/oder dritten Schwenkarmes (6, 8, 10).

19. Manipulator (1) nach einem der Ansprüche 3 bis 18, **dadurch gekennzeichnet, dass** das Basiselement (15) zumindest zwei Greiferelement-Tragarmen (45) mit jeweils einem ersten Endabschnitt (46) und mit jeweils einem zweiten Endabschnitt (47) aufweist, welche Greiferelement-Tragarme (45) radial zur zweiten Rotationsachse (14) beabstandet sind, und welche Greiferelement-Tragarme (45) an ihrem ersten Endabschnitt (46) in vorzugsweise bogenförmigen Führungsabschnitten (48) im Basiselement (15) der Greiferanordnung (13) verstellbar geführt und lösbar fixiert sind und welche Greiferelement-Tragarme (45) an ihrem zweiten Endabschnitt (47) ein Greiferelement (16) aufweisen.

20. Manipulator (1) nach Anspruch 19, **dadurch gekennzeichnet, dass** die zumindest zwei Greiferelement-Tragarme (45), bevorzugt im Bereich ihres jeweiligen ersten Endabschnitts (46), ein Fixiermittel (49) aufweisen, welches Fixiermittel (49) zur lösbaren Fixierung der zumindest zwei Greiferelement-Tragarme (45) gegenüber dem Basiselement (15) ausgebildet ist.

21. Manipulator (1) nach einem der Ansprüche 5 bis 20, **dadurch gekennzeichnet, dass** eine Unterdruckleitung (19) des zumindest einen Unterdruck-Greiferelements (18) mit einem fluidischen Absperrelement (50) ausgebildet ist.

22. Manipulator (1) nach einem der vorhergehenden Ansprüche, **dadurch gekennzeichnet, dass** er in Bezug auf seine Schwenkachsen ausschließlich die genannte horizontale erste Schwenkachse (5), die genannte horizontale zweite Schwenkachse (7), die genannte horizontale dritte Schwenkachse (9), die genannte erste Rotationsachse (11), und die genannte zweite Rotationsachse (14) aufweist.

23. Biegeanlage (37) umfassend eine Biegemaschine (33), zumindest einen Manipulator (1), eine Führungsanordnung (3) mit einer Führungsachse (38), entlang welcher Führungsachse (38) der zumindest eine Manipulator (1) verfahrbar ist oder eine ortsfeste Verankerung für den zumindest einen Manipulator (1), und eine Anlagensteuerung, welche zum Vorgeben von Bewegungen und/oder Bewegungsabläufen des zumindest einen Manipulators (1) ausgebildet ist, **dadurch gekennzeichnet, dass** der zumindest eine Manipulator (1) nach einem der Ansprüche 1 bis 22 ausgebildet ist.

24. Biegeanlage (37) nach Anspruch 23, **dadurch gekennzeichnet, dass** die Biegemaschine (33) einen Biegetisch (32) und einen relativ zum Biegetisch (32) verstellbaren Pressenbalken (39) umfasst, und dass innerhalb von äußeren Umgrenzungskanten (41) des Biegetisches (32) wenigstens ein Unterwerkzeug (31) positioniert ist, an welchem Unterwerkzeug (31) eine Bauteil-Abstützebene (40) zur vertikalen Abstützung von wenigstens einem zu bearbeitenden Bauteil ausgebildet ist.

## Claims

1. A manipulator (1) for components (2), in particular for sheet metal parts, wherein the manipulator (1) is configured to pick up, transport, hold and set down a component (2), comprising
- a base body (4), which can be mounted in a stationary manner or moved along a guide arrangement (3),
- a first pivot arm (6) pivotally coupled to the base body (4) via a horizontal first pivot axis (5),
- a second pivot arm (8) pivotally coupled to the first pivot arm (6) via a horizontal second pivot axis (7),
- a third pivot arm (10) pivotally coupled to the second pivot arm (6) via a horizontal third pivot axis (9),
- wherein a first axis of rotation (11) extending radially to the third pivot axis (9) is formed on the third pivot arm (10),
**characterized in that**
a gripper support arm (12) rotatably coupled to the third pivot arm (10) via the first axis of rotation (11) is formed, wherein the gripper support arm (12) extends radially with respect to the first axis of rotation (11), and wherein a gripping arrangement (13) is rotatably coupled to the gripper support arm (12) via a second axis of rotation (14), which is spaced apart from the first axis of rotation (11).

2. The manipulator (1) according to Claim 1, **characterized in that** the first axis of rotation (11) and the second axis of rotation (14) are formed parallel to one another.

3. The manipulator (1) according to one of Claims 1 or 2, **characterized in that** the gripping arrangement (13) comprises a base element (15) rotatably mounted on the gripper support arm (12) and a gripper element (16), which can be coupled to the base element (15) as required and which can in particular be changed without any tools.

4. The manipulator (1) according to Claim 3, **characterized in that** the gripper element (16) comprises a pincer gripper and/or a magnetic gripper.

5. The manipulator (1) according to Claim 3 or 4, **characterized in that** the gripper element (16) comprises a negative-pressure gripper (17) and that at least one negative-pressure gripper element (18) is formed on the negative-pressure gripper (17).

6. The manipulator (1) according to Claim 5, **characterized in that** a vacuum line (19) is formed, which is formed as a rotary union in the transition portion (20) between the third pivot arm (10) and the gripper support arm (12) and/or in the transition portion (20') between the gripper support arm (12) and the gripping arrangement (13).

7. The manipulator (1) according to one of the preceding claims, **characterized in that** the gripper support arm (12) is rotatably coupled to the third pivot arm (10) and by means of a first pivot bearing (21) via a coupling (22), which can be activated and deactivated as required.

8. The manipulator (1) according to one of the preceding claims, **characterized in that** the gripping arrangement (13) is rotatably coupled to the gripper support arm (12) by means of a second pivot bearing (23).

9. The manipulator (1) according to one of the preceding claims, **characterized in that** a torque support (24) is arranged in a rotationally fixed manner on the third pivot arm (10), preferably a releasably configured torque support (24) is formed.

10. The manipulator (1) according to one of the preceding claims, **characterized in that** a toothed belt transmission (25) is formed, said toothed belt transmission (25) comprising a first gear (26), which is rotationally fixed relative to the first axis of rotation (11) and comprising a second gear (27), which is rotatable about the second axis of rotation (14), and said toothed belt transmission (25) comprising a belt (28), which couples the first gear (26) and the second gear (27) in terms of movement.

11. The manipulator (1) according to Claim 10, **characterized in that** the first gear (26) has a larger diameter than the second gear (27).

12. The manipulator (1) according to one of Claims 1 to 9, **characterized in that** a first rotary drive is configured to rotate the gripper support arm (12) about the first axis of rotation (11), and that a second rotary drive (42), which acts independently of the first rotary drive, is configured to rotate the gripping arrangement (13) about the second axis of rotation (14).

13. The manipulator (1) according to Claim 12, **characterized in that** the second rotary drive (42) is configured as an electromotive actuator, preferably as a stepping motor, or that the second rotary drive (42) is configured as a pneumatic actuator, and that the second rotary drive (42) is fastened to the gripper support arm (12).

14. The manipulator (1) according to Claim 12 or 13, **characterized in that** the second rotary drive (42) is configured to rotate the gripping arrangement (13) between a first end stop (43) and a second end stop (44), wherein a rotational movement is possible, preferably a rotational movement by up to 180°, to be carried out between the first end stop (43) and the second end stop (44).

15. The manipulator according to one of Claims 1 to 9, **characterized in that** a spur gear transmission is formed, said spur gear transmission comprising a first spur gear, which is rotatable about the first axis of rotation (11) and comprising a second spur gear, which is rotatable about the second axis of rotation (14), wherein the first and the second spur gears interact directly or indirectly in a movement-coupled manner.

16. The manipulator (1) according to one of the preceding claims, **characterized in that** a maximum height (29) of the projecting portion of the gripper support arm (12), including the gripping arrangement (13) held on the gripper support arm (12), is less than a structural height (30) of a lower tool (31) relative to a bending table (32) of a bending machine (33), in particular is a maximum of 150mm, preferably is a maximum of 100mm.

17. The manipulator (1) according to one of the preceding claims, **characterized in that** the gripper support arm (12) comprises a first support arm portion (34) and a second support arm portion (35), wherein the first support arm section (34) and the second support arm section (35) are arranged offset to one another in the direction of the first axis of rotation (11) or second axis of rotation (14).

18. The manipulator (1) according to one of the preceding claims, **characterized in that** a support arm length (36) of the gripper support arm (12), said support arm length (36) extending between the first axis of rotation (11) and the second axis of rotation (14), is shorter than a length of the first, second and/or third pivot arm (6, 8, 10).

19. The manipulator (1) according to one of Claims 3 to 18, **characterized in that** the base element (15) comprises at least two gripper-element support arms (45) having a respective first end portion (46) and a respective second end portion (47), said gripper-element support arms (45) being radially spaced apart from the second axis of rotation (14), and said gripper-element support arms (45) being adjustably guided at their first end portion (46) in preferably arcuate guide portions (48) in the base element (15) of the gripping arrangement (13) and being releasably fixed, and said gripper-element support arms (45) having a gripper element (16) at their second end section (47).

20. The manipulator (1) according to Claim 19, **characterized in that** the at least two gripper-element support arms (45), preferably in the region of their respective first end portion (46), comprise a fixing means (49), said fixing means (49) being configured to releasably fix the at least two gripper-element support arms (45) relative to the base element (15).

21. The manipulator (1) according to one of Claims 5 to 20, **characterized in that** a vacuum line (19) of the at least one negative-pressure gripper element (18) is formed with a fluidic shut-off element (50).

22. The manipulator (1) according to one of the preceding claims, **characterized in that**, with respect to its pivot axes, it exclusively comprises said horizontal first pivot axis (5), said horizontal second pivot axis (7), said horizontal third pivot axis (9), said first axis of rotation (11) and said second axis of rotation (14).

23. A bending installation (37) comprising a bending machine (33), at least one manipulator (1), a guide arrangement (3) with a guide axis (38) , the at least one manipulator (1) being movable along said guide axis (38), or a fixed anchoring for the at least one manipulator (1), and an installation control, which is configured to predefine movements and/or movement sequences of the at least one manipulator (1), **characterized in that** the at least one manipulator (1) is formed according to one of Claims 1 to 22.

24. The bending installation (37) according to Claim 23, **characterized in that** the bending machine (33) comprises a bending table (32) and a press beam (39), which can be adjusted relative to the bending table (32), and that at least one lower tool (31) is positioned within outer boundary edges (41) of the bending table (32), a component support plane (40) for the vertical support of at least one component to be machined being formed on said lower tool (31).

## Revendications

1. Manipulateur (1) pour des pièces (2), plus particulièrement pour des pièces en tôle, dans lequel le manipulateur (1) est conçu pour saisir, transporter, maintenir et/ou déposer une pièce (2), comprenant
- un corps de base (4) pouvant être monté de manière fixe ou pouvant être déplacé le long d'un dispositif de guidage (3),
- un premier bras pivotant (6) couplé de manière pivotante avec le corps de base (4) par l'intermédiaire d'un premier axe de pivotement horizontal (5),
- un deuxième bras pivotant (8) couplé de manière pivotante avec le premier bras pivotant (6) par l'intermédiaire d'un deuxième axe de pivotement horizontal (7),
- un troisième bras pivotant (10) couplé de manière pivotante avec le deuxième bras pivotant (8) par l'intermédiaire d'un troisième axe de pivotement horizontal (9),
- dans lequel, sur le troisième bras pivotant (10), est réalisé un premier axe de rotation (11) s'étendant radialement par rapport au troisième axe de pivotement (9),
**caractérisé en ce que**
un bras porteur de préhenseur (12), couplé de manière rotative avec le troisième bras pivotant (10) par l'intermédiaire du premier axe de rotation (11), est prévu, dans lequel le bras porteur de préhenseur (12) s'étend radialement par rapport au premier axe de rotation (11) et dans lequel un dispositif préhenseur (13) est couplé de manière rotative avec le bras porteur de préhenseur (12) par l'intermédiaire d'un deuxième axe de rotation (14), qui est distant du premier axe de rotation (11).

2. Manipulateur (1) selon la revendication 1, **caractérisé en ce que** le premier axe de rotation (11) et le deuxième axe de rotation (14) sont parallèles entre eux.

3. Manipulateur (1) selon l'une des revendications 1 ou 2, **caractérisé en ce que** le dispositif préhenseur (13) comprend un élément de base (15) logé de manière rotative sur le bras porteur de préhenseur (12) et un élément préhenseur (16), pouvant être couplé si nécessaire, plus particulièrement pouvant être remplacé sans outil, avec l'élément de base (15).

4. Manipulateur (1) selon la revendication 3, **caractérisé en ce que** l'élément préhenseur (16) comprend un préhenseur à pince et/ou un préhenseur magnétique.

5. Manipulateur (1) selon la revendication 3 ou 4, **caractérisé en ce que** l'élément préhenseur (16) comprend un préhenseur à dépression (17) et **en ce qu'**au moins un élément préhenseur à dépression (18) est prévu sur le préhenseur à dépression (17).

6. Manipulateur (1) selon la revendication 5, **caractérisé en ce qu'**une conduite à dépression (19) est prévue, qui est disposée dans la portion de transition (20) entre le troisième bras pivotant (10) et le bras porteur de préhenseur (12) et/ou dans la portion de transition (20') entre le bras porteur de préhenseur (12) et le dispositif préhenseur (13) et est conçue comme un passage rotatif.

7. Manipulateur (1) selon l'une des revendications précédentes, **caractérisé en ce que** le bras porteur de préhenseur (12) est couplé de manière rotative par l'intermédiaire d'un couplage (22), pouvant être activée et désactivé si nécessaire, avec le troisième bras pivotant (10) et au moyen d'un premier palier rotatif (21).

8. Manipulateur (1) selon l'une des revendications précédentes, **caractérisé en ce que** le dispositif préhenseur (13) est couplé de manière rotative avec le bras porteur de préhenseur (12) au moyen d'un deuxième palier rotatif (23).

9. Manipulateur (1) selon l'une des revendications précédentes, **caractérisé en ce que**, sur le troisième bras pivotant (10), est disposé, de manière fixe en rotation, un support de couple (24), de préférence un support de couple (24) conçu de manière amovible.

10. Manipulateur (1) selon l'une des revendications précédentes, **caractérisé en ce qu'**une transmission à courroie dentée (25) est prévue, cette transmission à courroie dentée (25) comprenant une première roue dentée (26), qui est fixe en rotation par rapport au premier axe de rotation (11) et comprenant une deuxième roue dentée (27) qui peut tourner autour du deuxième axe de rotation (14) et cette transmission à courroie dentée (25) comprenant une courroie (28) couplant en mouvement la première roue dentée (26) et la deuxième roue dentée (27).

11. Manipulateur (1) selon la revendication 10, **caractérisé en ce que** la première roue dentée (26) présente un diamètre plus grand que la deuxième roue dentée (27).

12. Manipulateur (1) selon l'une des revendications 1 à 9, **caractérisé en ce qu'**un premier entraînement rotatif est prévu pour la rotation du bras porteur de préhenseur (12) autour du premier axe de rotation (11) et **en ce qu'**un deuxième entraînement rotatif (42), fonctionnant indépendamment du premier entraînement rotatif, est prévu pour la rotation du dispositif préhenseur (13) autour du deuxième axe de rotation (14).

13. Manipulateur (1) selon la revendication 12, **caractérisé en ce que** le deuxième entraînement rotatif (42) est conçu comme un actionneur à moteur électrique, de préférence comme un moteur pas-à-pas ou **en ce que** le deuxième entraînement rotatif (42) est conçu comme un actionneur pneumatique et **en ce que** le deuxième entraînement rotatif (42) est fixé au bras poteur de préhenseur (12).

14. Manipulateur (1) selon la revendication 12 ou 13, **caractérisé en ce que** le deuxième entraînement rotatif (42) pour la rotation du dispositif préhenseur (13) est disposé entre une première butée finale (43) et une deuxième butée finale (44), dans lequel, entre la première butée finale (43) et la deuxième butée finale (44), un mouvement de rotation peut être exécuté, de préférence un mouvement de rotation jusqu'à 180° peut être exécuté.

15. Manipulateur (1) selon l'une des revendications 1 à 9, **caractérisé en ce qu'**une transmission à roues droites est prévue, cette transmission à roues droites comprend une première roue droite, qui peut tourner autour du premier axe de rotation (11), et- une deuxième roue droite qui peut tourner autour du deuxième axe de rotation (14), dans lequel les première et deuxième roues droites interagissent directement ou indirectement de manière couplée en mouvement.

16. Manipulateur (1) selon l'une des revendications précédentes, **caractérisé en ce qu'**une hauteur la plus grande (29) de la portion en saillie du bras porteur de préhenseur (12), y compris le dispositif préhenseur (13) maintenu sur le bras porteur de préhenseur (12), est inférieure à une hauteur de structure (30) d'un outil inférieur (31) par rapport à une table de cintrage (32) d'une machine de cintrage (33), plus particulièrement est de 150 mm maximum, de préférence de 100 mm maximum.

17. Manipulateur (1) selon l'une des revendications précédentes, **caractérisé en ce que** le bras porteur de préhenseur (12) comprend une première portion de bras porteur (34) et une deuxième portion de bras porteur (35), dans lequel la première portion de bras porteur (34) et la deuxième portion de bras porteur (35) sont disposés de manière décalée entre elles dans la direction du premier axe de rotation (11) ou du deuxième axe de rotation (14).

18. Manipulateur (1) selon l'une des revendications précédentes, **caractérisé en ce qu'**une longueur de bras porteur (36) du bras porteur de préhenseur (12), cette longueur de bras porteur (36) s'étendant entre le premier axe de rotation (11) et le deuxième axe de rotation (14), est inférieure à une longueur des premier, deuxième et/ou troisième bras pivotants (6, 8, 10).

19. Manipulateur (1) selon l'une des revendications 3 à 18, **caractérisé en ce que** l'élément de base (15) comprend au moins deux bras porteurs d'éléments préhenseurs (45) avec chacun une première portion d'extrémité (46) et avec chacun une deuxième portion d'extrémité (47), ces bras porteurs d'éléments préhenseurs (45) étant distants radialement du deuxième axe de rotation (14) et ces bras porteurs d'éléments préhenseurs (45) étant guidés de manière réglable, au niveau de leur première portion d'extrémité (46), dans des portions de guidage (48), de préférence en forme d'arc de cercle, dans l'élément de base (15) du dispositif préhenseur (13) et fixés de manière amovible et ces bras porteurs d'éléments préhenseurs (45) comprenant un élément préhenseur (16) au niveau de leur deuxième portion d'extrémité (47).

20. Manipulateur (1) selon la revendication 19, **caractérisé en ce que** les au moins deux bras porteurs d'éléments préhenseurs (45) comprennent, de préférence au niveau de leur première portion d'extrémité (46) respective, un moyen de fixation (49), ce moyen de fixation (49) étant conçu pour la fixation amovible des au moins deux bras porteurs d'éléments préhenseurs (45) par rapport à l'élément de base (15).

21. Manipulateur (1) selon l'une des revendications 5 à 20, **caractérisé en ce qu'**une conduite à dépression (19) de l'au moins un élément préhenseur à dépression (18) est munie d'un élément d'arrêt fluidique (50).

22. Manipulateur (1) selon l'une des revendications précédentes, **caractérisé en ce qu'**il comprend, en ce qui concerne ses axes de pivotement, exclusivement ledit premier axe de pivotement horizontal (5), ledit deuxième axe de pivotement horizontal (7), ledit troisième axe de pivotement horizontal (9), ledit premier axe de rotation (11) et ledit deuxième axe de rotation (14).

23. Installation de cintrage (37) comprenant une machine de cintrage (33), au moins un manipulateur (1), un dispositif de guidage (3) avec un axe de guidage (38), l'au moins un manipulateur (1) pouvant être déplacé le long de cet axe de guidage (38), ou un ancrage fixe pour l'au moins un manipulateur (1) et une commande d'installation qui est conçue pour le contrôle de mouvements et/ou de processus de déplacement de l'au moins un manipulateur (1), **caractérisée en ce que** l'au moins un manipulateur (1) est conçu selon l'une des revendications 1 à 22.

24. Installation de cintrage (37) selon la revendication 23, **caractérisée en ce que** la machine de cintrage (33) comprend une table de cintrage (32) et une barre de presse (39) réglable par rapport à la table de cintrage (32) et **en ce que**, à l'intérieur d'arêtes de délimitation externe (41) de la table de cintrage (32), est positionné au moins un outil inférieur (31), un plan d'appui de pièce (40), pour l'appui vertical d'au moins une pièce à usiner, étant prévu sur cet outil inférieur (31).
